# EUROPEAN PATENT APPLICATION

(11) **EP 4 742 795 A1**
(43) Date of publication of application: **13.05.2026**
(21) Application number: 23944576.0
(22) Date of filing: 07.07.2023
(51) Int. Cl.: H04W 72/0453

(54) **INFORMATION TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN)
(74) Representative: Novagraaf Technologies
(86) International application number: PCT/CN2023/106417
(87) International publication number: WO 2025/010553

(57) **Abstract**

The present application relates to the field of communications. Disclosed are an information transmission method and apparatus, and a device and a storage medium. The method comprises: receiving first configuration information, which is used for indicating at least one first frequency-domain resource set and/or at least one second frequency-domain resource set, wherein a terminal device operates on at least some frequency-domain resource sets among the at least one first frequency-domain resource set and/or the at least one second frequency-domain resource set, and a third frequency-domain resource set. The accuracy and reliability of time-domain synchronization of a plurality of frequency-domain resource sets on which the present apparatus operates can be guaranteed, and resource overheads in a communication system can also be reduced, thereby avoiding power consumption waste caused by redundant information, and improving the transmission efficiency of the communication system.

## Description

### TECHNICAL FIELD

The present disclosure relates to the field of communications, and in particular, relates to a method and an apparatus for transmitting information, and a device and a storage medium thereof.

### RELATED ART

Communication based on carrier aggregation (CA) technology is supported between a network device and a terminal device. In a CA communication scenario, the terminal device still receives system information such as synchronization signals and broadcast information on each carrier, which is evidently quite redundant.

Therefore, how to reduce the overhead caused by redundant information in the CA communication scenario is a problem that needs to be addressed.

### SUMMARY

Embodiments of the present disclosure provide a method and an apparatus for transmitting information, and a device and a storage medium thereof. The technical solutions are as follows.

According to an aspect of the present disclosure, a method for transmitting information is provided. The method is performed by a terminal device. The method includes: receiving first configuration information, wherein the first configuration information is used to indicate at least one first frequency-domain resource set and/or at least one second frequency-domain resource set, wherein the terminal device operates on a third frequency-domain resource set and on at least part of frequency-domain resource sets within the at least one first frequency-domain resource set and/or the at least one second frequency-domain resource set; wherein a first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

According to an aspect of the present disclosure, a method for transmitting information is provided. The method is performed by a network device. The method includes: transmitting first configuration information to a terminal device, wherein the first configuration information is used to indicate at least one first frequency-domain resource set and/or at least one second frequency-domain resource set, wherein the terminal device operates on a third frequency-domain resource set and on at least part of frequency-domain resource sets within the at least one first frequency-domain resource set and/or the at least one second frequency-domain resource set; wherein a first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

According to an aspect of the present disclosure, an apparatus for transmitting information is provided. The apparatus includes: a first receiving module, configured to receive first configuration information, wherein the first configuration information is used to indicate at least one first frequency-domain resource set and/or at least one second frequency-domain resource set, wherein the terminal device operates on a third frequency-domain resource set and on at least part of frequency-domain resource sets within the at least one first frequency-domain resource set and/or the at least one second frequency-domain resource set; wherein a first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

According to an aspect of the present disclosure, an apparatus for transmitting information is provided. The apparatus includes: a second transmitting module, configured to transmit first configuration information to a terminal device, wherein the first configuration information is used to indicate at least one first frequency-domain resource set and/or at least one second frequency-domain resource set, wherein the terminal device operates on a third frequency-domain resource set and on at least part of frequency-domain resource sets within the at least one first frequency-domain resource set and/or the at least one second frequency-domain resource set; wherein a first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

According to an aspect of the present disclosure, a terminal device is provided. The terminal device includes: a processor; a transceiver, communicably connected to the processor; and a memory, configured to store one or more executable instructions of the processor, wherein the processor is configured to load and execute the one or more executable instructions to cause the terminal device to perform the method for transmitting information as described above.

According to an aspect of the present disclosure, a network device is provided. The network device includes: a processor; a transceiver, communicably connected to the processor; and a memory, configured to store one or more executable instructions of the processor, wherein the processor is configured to load and execute the one or more executable instructions to cause the network device to perform the method for transmitting information as described above.

According to an aspect of the present disclosure, a computer-readable storage medium is provided. The computer-readable storage medium stores one or more executable instructions, and the one or more executable instructions, when loaded and executed by a processor, cause the processor to perform the method for transmitting information as described above.

According to an aspect of the present disclosure, a computer program product is provided. The computer program product includes one or more computer instructions stored in a computer-readable storage medium, wherein the one or more computer instructions, when read by a processor of a computer device from the computer-readable storage medium and executed by the processor, cause the computer device to perform the method for transmitting information as described above.

According to an aspect of the present disclosure, a chip is provided. The chip includes programmable logic circuitry or one or more programs, wherein the chip, when running the programmable logic circuitry and/or the one or more programs, is caused to perform the method for transmitting information as described above.

According to an aspect of the present disclosure, a computer program is provided. The computer program includes one or more computer instructions, wherein the one or more computer instructions, when executed by a processor of a computer device, cause the computer device to perform the method for transmitting information as described above.

The technical solutions according to the embodiments of the present disclosure include at least the following beneficial effects.

By indicating, over configuration information, a frequency-domain resource set in which a terminal device operates, the terminal device is allowed to operate in different types of frequency-domain resource sets, which greatly improves the flexibility and specificity of transmitting synchronization signals and broadcast information in a communication system, such that not only the accuracy and reliability of time-domain synchronization across multiple frequency-domain resource sets on which the terminal device operates can be ensured, but also resource overhead in the communication system can be reduced, thereby avoiding power consumption caused by redundant information, and improving the transmission efficiency of the communication system.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 illustrates a schematic structural diagram of a synchronization signal block according to some embodiments of the present disclosure;
FIG. 2 illustrates a schematic diagram of a carrier aggregation technology according to some embodiments of the present disclosure;
FIG. 3 illustrates a schematic diagram of a mobile communication system according to some embodiments of the present disclosure;
FIG. 4 illustrates a schematic flowchart of a method for transmitting information according to some embodiments of the present disclosure;
FIG. 5 illustrates a schematic flowchart of a method for transmitting information according to some embodiments of the present disclosure;
FIG. 6 illustrates a schematic diagram of a time-domain relationship between synchronization signals according to some embodiments of the present disclosure;
FIG. 7 illustrates a schematic diagram of a time-domain relationship between synchronization signals according to some embodiments of the present disclosure;
FIG. 8 illustrates a schematic flowchart of a method for transmitting information according to some embodiments of the present disclosure;
FIG. 9 illustrates a schematic flowchart of a method for transmitting information according to some embodiments of the present disclosure;
FIG. 10 illustrates a schematic flowchart of a method for transmitting information according to some embodiments of the present disclosure;
FIG. 11 illustrates a schematic diagram of information transmission according to some embodiments of the present disclosure;
FIG. 12 illustrates a structural block diagram of an apparatus for transmitting information according to some embodiments of the present disclosure;
FIG. 13 illustrates a structural block diagram of an apparatus for transmitting information according to some embodiments of the present disclosure; and
FIG. 14 illustrates a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the embodiments, examples of which are illustrated in the accompanying drawings. When the following description refers to the accompanying drawings, the same numbers in different accompanying drawings represent the same or similar elements unless otherwise indicated. The embodiments described in the following embodiments do not represent all embodiments consistent with the present disclosure. Rather, they are merely examples of apparatus and methods consistent with some aspects of the present disclosure, as detailed in the appended claims.

The terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," or the like may be used in the present disclosure to describe various information, such information should not be limited to these terms. These terms are only used to distinguish one type of information from another. For example, first information may also be referred to as second information, and similarly, second information may also be referred to as first information, without departing from the scope of the present disclosure. The word "if", as used herein, may be interpreted as "in a case where," "in s case of," or "in response to determining that," depending on the context.

The related arts involved in the embodiments of the present disclosure are described as follows.

### 1) Synchronization signal and PBCH block (SSB)

The SSB is composed of a primary synchronization signal (PSS), a secondary synchronization signal (SSS), and a physical broadcast channel (PBCH).

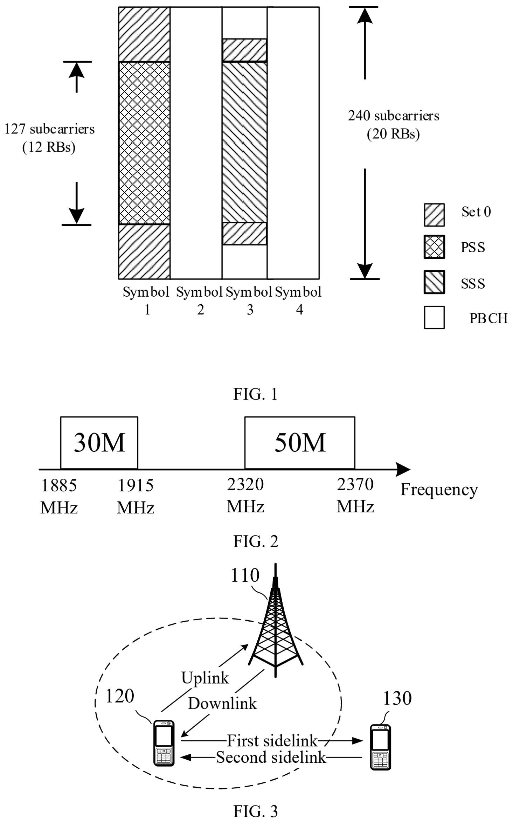

As illustrated in FIG. 1, the SSB occupies four orthogonal frequency-division multiplexing (OFDM) symbols in the time domain and occupies 240 subcarriers in the frequency domain. In a case where one subcarrier includes 12 resource blocks (RB), the SSB can be refers to as occupying 20 RBs in the frequency domain. The PSS is located in the 1^{st} OFDM symbol and occupies 127 subcarriers that are centrally located in the frequency domain; the SSS is located in the 3^{rd} OFDM symbol and occupies 127 subcarriers that are centrally located in the frequency domain. Some subcarriers are reserved on both sides of the PSS and SSS as protection (i.e., set 0). The PBCH is located on the 2^{nd} OFDM symbol, the 4^{th} OFDM symbol, and other subcarriers of the 3^{rd} OFDM symbol except for the SSS and set 0.

### 2) Multi-carrier working mechanism

Most mobile communication operators possess the right to use multiple non-contiguous narrowband frequency band resources. For example, Operator A is allocated 30 M bandwidth in the 1.9 GHz frequency band, 15 M bandwidth in the 2.0 GHz frequency band, 50 M bandwidth in the 2.3 GHz frequency band, and the like. Operator B is allocated 20 M bandwidth in the 1.7 GHz frequency band, 20 M bandwidth in the 1.8 GHz frequency band, 20 M bandwidth in the 2.3 GHz frequency band, 20 M bandwidth in the 2.5 GHz frequency band, and the like. Operator C is allocated 15 M bandwidth in the 1.7 GHz frequency band, 15 M bandwidth in the 1.8 GHz frequency band, 20 M bandwidth in the 2.3 GHz frequency band, 20 M bandwidth in the 2.6 GHz frequency band, and the like.

In the related arts, a communication system can support a maximum bandwidth of 100 M in frequency bands below 6 GHz. One method of deploying a communication system using the above-mentioned multiple non-contiguous narrowband frequency band resources is to adopt carrier aggregation (CA) technology, that is, a network device configures multiple cells for a terminal device, and the terminal device can receive or transmit data in multiple cells simultaneously. For example, as illustrated in FIG. 2, the network device configures two cells for the terminal device, and the bandwidths of the two cells are 30 M and 50 M, respectively. In this case, the maximum transmission bandwidth of the terminal device may be equivalent to 80 M.

Each cell configured by the network device for the terminal device can operate independently, and each cell will transmit synchronization signals, system information, and the like. In this case, for a terminal device using CA technology to operate simultaneously in multiple cells, it is obviously redundant and unnecessary to read the synchronization signal and system information on each cell, resulting in considerable resource waste within the communication system.

Based on the above problem, the present disclosure provides a method for transmitting information, which supports reducing the overall overhead of the communication system and decreasing the waste of transmission resources.

FIG. 3 illustrates a schematic diagram of a mobile communication system according to some embodiments of the present disclosure. The mobile communication system includes a network device 110 and a terminal device 120, and may further include or not include a terminal device 130, which is not limited in the present disclosure.

The network device 110 in the present disclosure provides wireless communication functions. The network device includes but not limited to: an evolved Node-B (eNB), a radio network controller (RNC), a Node-B (NB), a base station controller (BSC), a base transceiver station (BTS), a home base station (e.g., a home evolved Node-B , or a home Node-B , HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation Node-B (gNB) or a transmission reception point (a TRP or a TP) in a 5th generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5th generation (B5G), a 6th generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special Cell (SpCell), a secondary cell (SCell), a neighbor cell, or the like, of the terminal device.

The terminal device 120 in the present disclosure is also known as a UE, an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, an extended reality (XR) terminal, a baffle reality (BR) terminal, a cinematic reality (CR) terminal, a deceive reality (DR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal device 120 communicate with each other using an air interface technology, such as a Uu interface.

In some embodiments, there are two types of communication scenarios between the network device 110 and the terminal device 120: an uplink communication scenario and a downlink communication scenario. Uplink communication, also referred to as uplink transmission, refers to transmitting signals or data to the network device 110; downlink communication, also referred to as downlink transmission, refers to transmitting signals or data to the terminal device 120.

The terminal device 120 and the terminal device 130 communicate with each other using an air interface technology, such as a Uu interface.

In some embodiments, there are two types of communication scenarios between the terminal device 120 and the terminal device 130: a first sidelink communication scenario and a second sidelink communication scenario. The first sidelink communication refers to transmitting signals to the terminal device 130; the second sidelink communication refers to transmitting signals to the terminal device 120.

The terminal device 120 and the terminal device 130 are both within network coverage and located in the same cell, or the terminal device 120 and the terminal device 130 are both within network coverage but located in different cells, or the terminal device 120 is within network coverage, but the terminal device 130 is outside network coverage.

The technical solutions according to the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. Among them, the 5G mobile communication system may include non-standalone (NSA) and/or standalone (SA).

The technical solutions provided by the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

The mobile communication system according to the embodiments of the present disclosure is applicable to, but is not limited to, at least one of: an uplink communication scenario, a downlink communication scenario, or a sidelink communication scenario.

It should be understood that in some embodiments of the present disclosure, a cell and a carrier may be equivalent. For example, "N cells" may be replaced by "N carriers," "at least one cell" may be replaced by "at least one carrier," "an unscheduled cell" may be replaced by "an unscheduled carrier," and "a scheduled cell" may be replaced by "a scheduled carrier," and so on.

It should be understood that in one scheduling, in a case where one physical channel is scheduled on each cell or carrier, then "N cells" may also be understood as "N physical channels."

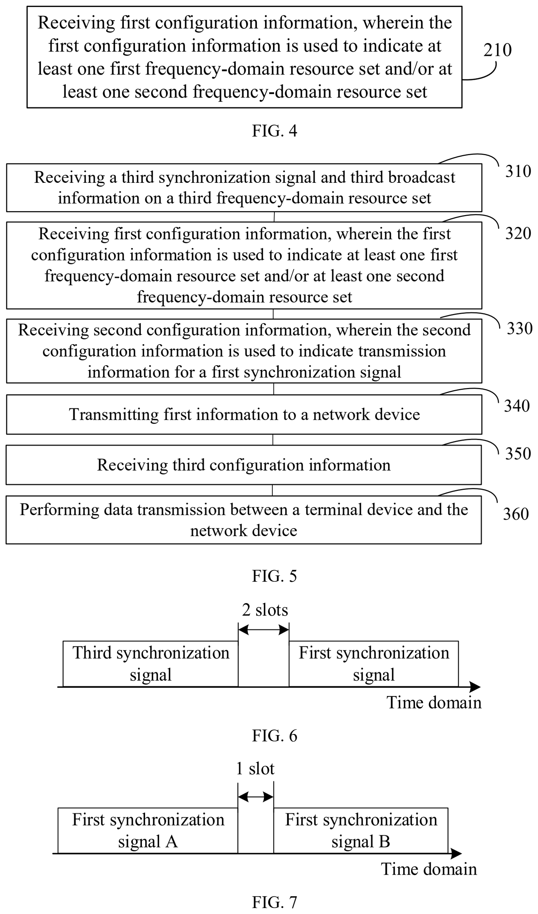

FIG. 4 illustrates a schematic flowchart of a method for transmitting information according to some embodiments of the present disclosure. The method is explained illustratively on the example that it is performed by the terminal device illustrated in FIG. 3. The method includes at least part of the following processes.

**In process 210**, the terminal device receives first configuration information, wherein the first configuration information is used to indicate at least one first frequency-domain resource set and/or at least one second frequency-domain resource set.

The terminal device operates on at least part of frequency-domain resource sets within the at least one first frequency-domain resource set and/or the at least one second frequency-domain resource set and on a third frequency-domain resource set. Alternatively, it may be understood that all the frequency-domain resource sets in the at least one of at least one first frequency-domain resource set or the at least one second frequency-domain resource set belong to the operating frequency of the terminal device, and the third frequency-domain resource set also belongs to the operating frequency of the terminal device. Alternatively, it may be understood that the part of the frequency-domain resource sets within the at least one first frequency-domain resource set and/or the at least one second frequency-domain resource set belongs to the operating frequency of the terminal device, and the third frequency-domain resource set also belongs to the operating frequency of the terminal device.

In some embodiments, the terminal device operates on the at least one first frequency-domain resource set and the third frequency-domain resource set. Alternatively, the terminal device operates on the at least one second frequency-domain resource set and the third frequency-domain resource set. Alternatively, the terminal device operates on the at least one first frequency-domain resource set, the at least one second frequency-domain resource set, and the third frequency-domain resource set.

The terminal device operates on the at least one first frequency-domain resource set, that is, the at least one first frequency-domain resource set belongs to the operating frequency of the terminal device. The terminal device performs at least one of the following operating behaviors in the at least one first frequency-domain resource set: signal reception, signal transmission, signal detection, signal monitoring, signal measurement, channel measurement, cell access, cell residency, cell handover, or the like. The cases where the terminal device operates on the at least one second frequency-domain resource set and the third frequency-domain resource set may refer to the relevant content for the terminal device operating on the at least one first frequency-domain resource set, and the details will not be elaborated herein any further.

A synchronization signal is transmitted on each of the at least one the first frequency-domain resource set, and no broadcast information is transmitted on each of the at least one the first frequency-domain resource set. No synchronization signal or broadcast information is transmitted on each of the at least one the second frequency-domain resource set; and a synchronization signal and broadcast information are transmitted on the third frequency-domain resource set.

To better distinguish the synchronization signals and broadcast information in different frequency-domain resource sets, in the embodiments of the present disclosure, the synchronization signal transmitted on the first frequency-domain resource set is referred to as the first synchronization signal, and the broadcast information transmitted on the first frequency-domain resource set is referred to as the first broadcast information. Similarly, the synchronization signal transmitted on the second frequency-domain resource set is referred to as the second synchronization signal, and the broadcast information transmitted on the second frequency-domain resource set is referred to as the second broadcast information. Similarly, the synchronization signal transmitted on the third frequency-domain resource set is referred to as the third synchronization signal, and the broadcast information transmitted on the third frequency-domain resource set is referred to as the third broadcast information. The terms "first," "second," and "third" are used for descriptive distinction and do not imply limitation.

Broadcast information refers to system information transmitted on the physical broadcast channel (PBCH). Both the synchronization signal and broadcast information may be considered as system information.

It should be noted that the concepts of "transmitting synchronization signal/broadcast information on a frequency-domain resource set" and "no synchronization signal/broadcast information transmitted on a frequency-domain resource set," as mentioned in the embodiments of the present disclosure, are described with respect to the terminal device.

In one case, "transmitting synchronization signal on a frequency-domain resource set" means that the network device transmits a synchronization signal to the terminal device on the frequency-domain resource set, and "no synchronization signal transmitted on a frequency-domain resource set" means that the network device does not transmit a synchronization signal to the terminal device on the frequency-domain resource set.

In another case, "transmitting synchronization signal on a frequency-domain resource set" means that the network device transmits a synchronization signal to the terminal device on the frequency-domain resource set, and the terminal device detects the synchronization signal on the frequency-domain resource set; "no synchronization signal transmitted on a frequency-domain resource set" means that the network device transmits a synchronization signal to the terminal device on the frequency-domain resource set, but the terminal device does not detect the synchronization signal on the frequency-domain resource set. The cases regarding broadcast information are similar, and the details will not be elaborated herein any further. In this case, since the network device can still refer to the transmission methods of synchronization signals and broadcast information in the related art, there is no need for significant adjustments to the transmission of synchronization signals and broadcast information, which is very friendly, low-cost, and easy to apply for the network device. Moreover, such a case is also very favorable for a terminal device that needs or expects to detect synchronization signals and broadcast information in each frequency-domain resource set, as the terminal device that needs or expects to detect the synchronization signals and the broadcast information in each frequency-domain resource set can still receive the synchronization signals and the broadcast information from the network device in each frequency-domain resource set. Therefore, it can be considered that the method for transmitting information in such a case has good compatibility, being compatible both with the terminal device that needs or expects to detect the synchronization signals and the broadcast information in each frequency-domain resource set and with the network device that transmits the synchronization signals and the broadcast information in each frequency-domain resource set.

In the embodiments of the present disclosure, a frequency-domain resource set refers to a set of frequency-domain resources. The frequency-domain resource includes at least one of a carrier, a cell, a serving cell, a bandwidth part (BWP), a resource block (RB), a resource block group (RBG), or the like.

The frequency-domain resource set may be a set of multiple frequency-domain resources of the same type, such as a set of multiple carriers, a set of multiple cells, a set of multiple BWPs, or a set of multiple RBGs. The frequency-domain resource set may also be a set of multiple frequency-domain resources of different types, such as a set of multiple RBs and RBGs or a set of multiple carriers and BWPs.

It should be understood that the number of set elements in one set may be 1 or may be an integer greater than 1. Therefore, the frequency-domain resource set may include only one frequency-domain resource unit, such as including only one carrier, one cell, or one BWP; the frequency-domain resource set may include multiple frequency-domain resource units, such as including m carriers, k cells, or y BWPs, wherein m, k, and y are all integers greater than 1.

In a case where no time synchronization (coarse synchronization) relationship is present among the multiple frequency-domain resource sets in which the terminal device operates, it is possible to transmit a synchronization signal but not broadcast information on at least part of the frequency-domain resource sets within the multiple frequency-domain resource sets. For example, the first synchronization signal is transmitted on the first frequency-domain resource set without transmitting the first broadcast information. In this way, the synchronization requirement of the first frequency-domain resource set is fulfilled, such that the first frequency-domain resource set achieves higher synchronization accuracy, and at the same time, the overall resource overhead of the communication system is reduced.

In a case where a time synchronization (coarse synchronization) relationship is present among the multiple frequency-domain resource sets in which the terminal device operates, it is possible to neither transmit a synchronization signal nor broadcast information on at least part of frequency-domain resource sets within the multiple frequency-domain resource sets. For example, neither the second synchronization signal nor the second broadcast information is transmitted on the second frequency-domain resource set. In this way, the overall resource overhead of the communication system can be further reduced.

The first configuration information is transmitted from the network device to the terminal device.

In some embodiments, at least one first frequency-domain resource set and/or at least one second frequency-domain resource set is explicitly indicated by the first configuration information, or at least one first frequency-domain resource set and/or at least one second frequency-domain resource set is implicitly indicated by the first configuration information.

In some embodiments, the specific manner of implicit indication is determined in the communication protocol, configured by the network device, or determined through negotiation between the network device and the terminal device.

In some embodiments, the second frequency-domain resource set is used for data transmission. In some embodiments, the second frequency-domain resource set is used to transmit at least one of the following channels or signals: a physical downlink control channel (PDCCH), a physical downlink shared channel (PDSCH), a physical uplink control channel (PUCCH), a physical uplink shared channel (PUSCH), a physical random access channel (PRACH), a cell reference signal (CRS), a phase tracking reference signal (PT-RS), a demodulation reference signal (DMRS), a sounding reference signal (SRS), or a channel state information reference signal (CSI-RS).

It should be understood that in the embodiments of the present disclosure, transmission may be understood as sending, receiving, or both sending and receiving.

In summary, in the method according to the embodiments of the present disclosure, by indicating, over configuration information, the frequency-domain resource set on which the terminal device operates, the terminal device can operate in different types of frequency-domain resource sets (for example, a type in which both the synchronization signal and the broadcast information are transmitted, a type in which the synchronization signal is transmitted but the broadcast information is not transmitted, and a type in which neither the synchronization signal nor the broadcast information is transmitted), which greatly enhances the flexibility and specificity of transmitting synchronization signals and broadcast information in a communication system. The method according to the embodiments of the present disclosure not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

FIG. 5 illustrates a schematic flowchart of a method for transmitting information according to some embodiments of the present disclosure. The method is explained illustratively on the example that it is performed by the terminal device illustrated in FIG. 3. The method includes at least part of the following processes.

**In process 310,** the terminal device receives a third synchronization signal and third broadcast information on a third frequency-domain resource set.

The third frequency-domain resource set belongs to the operating frequency of the terminal device.

The third synchronization signal and the third broadcast information are transmitted by the network device and transmitted on the third frequency-domain resource set. The terminal device detects the third synchronization signal and the third broadcast information on the third frequency-domain resource set.

In some embodiments, the third synchronization signal and the third broadcast information are carried and transmitted on an SSB, that is, the SSB includes the third synchronization signal and the third broadcast information. Therefore, process 310 may be implemented as process 310a.

In process 310a, an SSB is received on the third frequency-domain resource set.

**In process 320,** the terminal device receives first configuration information, wherein the first configuration information is used to indicate at least one first frequency-domain resource set and/or at least one second frequency-domain resource set.

The terminal device operates on at least part of frequency-domain resource sets within the at least one first frequency-domain resource set and/or the at least one second frequency-domain resource set and on a third frequency-domain resource set. Alternatively, it may be understood that all the frequency-domain resource sets in the at least one first frequency-domain resource set and/or the at least one second frequency-domain resource set belong to the operating frequency of the terminal device, and the third frequency-domain resource set also belongs to the operating frequency of the terminal device. Alternatively, it may be understood that the part of the frequency-domain resource sets within the at least one first frequency-domain resource set and/or the at least one second frequency-domain resource set belongs to the operating frequency of the terminal device, and the third frequency-domain resource set also belongs to the operating frequency of the terminal device.

In some embodiments, the terminal device operates on the at least one first frequency-domain resource set and the third frequency-domain resource set. Alternatively, the terminal device operates on the at least one second frequency-domain resource set and the third frequency-domain resource set. Alternatively, the terminal device operates on the at least one first frequency-domain resource set, the at least one second frequency-domain resource set, and the third frequency-domain resource set.

The relevant content regarding "the terminal device operating on the frequency-domain resource set" may be referred to process 210, and the details will not be elaborated herein any further.

A first synchronization signal is transmitted on each of the at least one the first frequency-domain resource set, and no first broadcast information is transmitted on each of the at least one the first frequency-domain resource set. No second synchronization signal or second broadcast information is transmitted on each of the at least one the second frequency-domain resource set; a third synchronization signal and third broadcast information are transmitted on the third frequency-domain resource set.

Broadcast information refers to system information transmitted on the PBCH. Both the synchronization signal and broadcast information may be considered as system information.

It should be noted that the concepts of "transmitting synchronization signal/broadcast information on a frequency-domain resource set" and "no synchronization signal/broadcast information transmitted on a frequency-domain resource set", as mentioned in the embodiments of the present disclosure, are described with respect to the terminal device.

In one case, "transmitting synchronization signal on a frequency-domain resource set" means that the network device transmits a synchronization signal to the terminal device on the frequency-domain resource set, and "no synchronization signal transmitted on a frequency-domain resource set" means that the network device does not transmit a synchronization signal to the terminal device on the frequency-domain resource set.

In another case, "transmitting synchronization signal on a frequency-domain resource set" means that the network device transmits a synchronization signal to the terminal device on the frequency-domain resource set, and the terminal device detects the synchronization signal on the frequency-domain resource set; "no synchronization signal transmitted on a frequency-domain resource set" means that the network device transmits a synchronization signal to the terminal device on the frequency-domain resource set, but the terminal device does not detect the synchronization signal on the frequency-domain resource set. The cases regarding broadcast information are similar, and the details will not be elaborated herein any further. In this case, since the network device can still refer to the transmission methods of synchronization signals and broadcast information in the related art, there is no need for significant adjustments to the transmission of synchronization signals and broadcast information, which is very friendly, low-cost, and easy to apply for the network device. Moreover, such a case is also very favorable for a terminal device that needs or expects to detect synchronization signals and broadcast information in each frequency-domain resource set, as the terminal device that needs or expects to detect the synchronization signals and the broadcast information in each frequency-domain resource set can still receive the synchronization signals and the broadcast information from the network device in each frequency-domain resource set. Therefore, it can be considered that the method for transmitting information in such a case has good compatibility, being compatible both with the terminal device that needs or expects to detect the synchronization signals and the broadcast information in each frequency-domain resource set and with the network device that transmits the synchronization signals and the broadcast information in each frequency-domain resource set.

Therefore, the method according to the embodiments of the present disclosure supports configuring the manner for transmitting a synchronization signal and broadcast information in a communication system based on whether all terminal devices in the communication system simultaneously operate on different types of frequency-domain resource sets, that is, based on whether the multiple frequency-domain resource sets on which the terminal devices in the communication system operate all transmit synchronization signals and broadcast information. That is, whether multiple types of frequency-domain resource sets are present is configured within the communication system, such that flexible configuration of synchronization signals and broadcast information is enabled, compatibility with terminal devices of different capabilities is achieved, and the overall efficiency of the communication system is improved.

In the embodiments of the present disclosure, a frequency-domain resource set refers to a set of frequency-domain resources. The frequency-domain resource includes at least one of a carrier, a cell, a serving cell, a BWP, an RB, an RBG, or the like.

The frequency-domain resource set may be a set of multiple frequency-domain resources of the same type, such as a set of multiple carriers, a set of multiple cells, a set of multiple BWPs, or a set of multiple RBGs. The frequency-domain resource set may also be a set of multiple frequency-domain resources of different types, such as a set of multiple RBs and RBGs or a set of multiple carriers and BWPs.

In a case where no time synchronization (coarse synchronization) relationship is present among the multiple frequency-domain resource sets in which the terminal device operates, it is possible to transmit a synchronization signal but not broadcast information on at least part of the frequency-domain resource sets within the multiple frequency-domain resource sets. For example, a first synchronization signal is transmitted on a first frequency-domain resource set without transmitting the first broadcast information. In this way, the synchronization requirement of the first frequency-domain resource set is fulfilled, such that the first frequency-domain resource set achieves higher synchronization accuracy, and at the same time, the overall resource overhead of the communication system is reduced.

In the case where a time synchronization (coarse synchronization) relationship is present among the multiple frequency-domain resource sets in which the terminal device operates, it is possible to neither transmit a synchronization signal nor broadcast information on at least part of frequency-domain resource sets within the multiple frequency-domain resource sets. For example, neither a second synchronization signal nor second broadcast information is transmitted on a second frequency-domain resource set. In this way, the power consumption of the terminal device can be reduced, and the overall resource overhead of the communication system can be further reduced.

Therefore, the method according to the embodiments of the present disclosure supports configuring the types of multiple frequency-domain resource sets based on the synchronization relationship among the multiple frequency-domain resource sets. That is, whether to transmit broadcast information and synchronization signals in each frequency-domain resource set is configured, such that flexible configuration of synchronization signals and broadcast information is enabled, and the overall efficiency of the communication system is improved.

The first configuration information is transmitted from the network device to the terminal device.

In some embodiments, at least one first frequency-domain resource set and/or at least one second frequency-domain resource set is explicitly indicated by the first configuration information, or at least one first frequency-domain resource set and/or at least one second frequency-domain resource set is implicitly indicated by the first configuration information.

In some embodiments, the specific manner of implicit indication is determined in the communication protocol, configured by the network device, or determined through negotiation between the network device and the terminal device.

In some embodiments, the first configuration information includes at least one of:
information indicating whether the at least one first frequency-domain resource set is present;
information of the at least one first frequency-domain resource set;
information indicating whether the at least one second frequency-domain resource set is present;
information of the at least one second frequency-domain resource set; or
a combination index of frequency-domain resource sets.

The combination index is used to indicate a combination of frequency-domain resource sets composed of at least two of: the at least one first frequency-domain resource set, the information of the at least one first frequency-domain resource set, the at least one second frequency-domain resource set, and the information of the at least one second frequency-domain resource set.

In some embodiments, the combination of frequency-domain resource sets is determined in the communication protocol, configured by the network device, or determined through negotiation between the network device and the terminal device.

In some embodiments, the communication protocol determines which combinations of frequency-domain resource sets are present, the index, identifier, or number corresponding to each combination of frequency-domain resource sets, which frequency-domain resource sets are contained in each combination of frequency-domain resource sets, which information of frequency-domain resource sets is contained in each combination of frequency-domain resource sets, which information corresponds to each frequency-domain resource set, or the like.

In some embodiments, the network device configures, for the terminal device, which combinations of frequency-domain resource sets are present, the index, identifier, or number corresponding to each combination of frequency-domain resource sets, which frequency-domain resource sets are contained in each combination of frequency-domain resource sets, which information of frequency-domain resource sets is contained in each combination of frequency-domain resource sets, which information corresponds to each frequency-domain resource set, or the like.

In some embodiments, the network device and the terminal device negotiate to determine which combinations of frequency-domain resource sets are present, the index, identifier, or number corresponding to each combination of frequency-domain resource sets, which frequency-domain resource sets are contained in each combination of frequency-domain resource sets, which information of frequency-domain resource sets is contained in each combination of frequency-domain resource sets, which information corresponds to each frequency-domain resource set, or the like.

In some embodiments, the information of the at least one first frequency-domain resource set includes at least one of: the number of the first frequency-domain resource sets, the frequency-domain position of the at least one first frequency-domain resource set, the central frequency point of the at least one first frequency-domain resource set, the bandwidth of the at least one first frequency-domain resource set, the subcarrier spacing of the at least one first frequency-domain resource set, the frequency-domain guard bandwidth of the at least one first frequency-domain resource set, the time-division duplex (TDD) uplink-downlink configuration corresponding to the at least one first frequency-domain resource set, information indicating whether a synchronization signal is contained in the at least one first frequency-domain resource set (that is, information indicating whether a synchronization signal is transmitted on the frequency-domain resource set), the measurement configuration of the at least one first frequency-domain resource set, or the reporting configuration of the at least one first frequency-domain resource set.

In some embodiments, the information of the at least one second frequency-domain resource set includes at least one of: the number of the second frequency-domain resource sets, the frequency-domain position of the at least one second frequency-domain resource set, the central frequency point of the at least one second frequency-domain resource set, the bandwidth of the at least one second frequency-domain resource set, the subcarrier spacing of the at least one second frequency-domain resource set, the frequency-domain guard bandwidth of the at least one second frequency-domain resource set, the TDD uplink-downlink configuration corresponding to the at least one second frequency-domain resource set, information indicating whether a synchronization signal is contained in the at least one second frequency-domain resource set (that is, information indicating whether a synchronization signal is transmitted on the frequency-domain resource set), the measurement configuration of the at least one second frequency-domain resource set, or the reporting configuration of the at least one second frequency-domain resource set.

The measurement configuration of the frequency-domain resource set includes an initial measurement configuration of the frequency-domain resource set. The measurement configuration of the frequency-domain resource set includes at least one of: a measurement signal, a measurement object, a measurement trigger event, a measurement value, a period value of the measurement signal, a period value of measurement, or a mapping relationship between the measurement configuration and the reporting configuration.

The reporting configuration of the frequency-domain resource set includes an initial reporting configuration of the frequency-domain resource set. The measurement configuration of the frequency-domain resource set includes at least one of: a reporting mode, a reporting resource (referring to a physical resource used for reporting), a reporting content, a reporting condition, a period value of reporting, or a mapping relationship between the measurement configuration and the reporting configuration.

In some embodiments, the second frequency-domain resource set is used for data transmission. In some embodiments, the second frequency-domain resource set is used to transmit at least one of the following channels or signals: a PDCCH, a PDSCH, a PUCCH, a PUSCH, a PRACH, a CRS, a CSI-RS, a PT-RS, a DMRS, or an SRS.

In some embodiments, an association is present between the second frequency-domain resource set and a fourth frequency-domain resource set, and a fourth synchronization signal is transmitted on the fourth frequency-domain resource set.

In some embodiments, the association between the second frequency-domain resource set and the fourth frequency-domain resource set includes at least one of the following cases:
·the second frequency-domain resource set and the fourth frequency-domain resource set are synchronized in the time-domain;
·a time-domain unit corresponding to the second frequency-domain resource set is the same as a time-domain unit corresponding to the fourth frequency-domain resource set;
·a time-domain interval between a time-domain unit corresponding to the second frequency-domain resource set and a time-domain unit corresponding to the fourth frequency-domain resource set is less than a first threshold; or
   synchronization of the second frequency-domain resource set is performed based on the fourth synchronization signal.

The time-domain unit corresponding to the second frequency-domain resource set may be understood as the time-domain unit occupied by the terminal device when operating on the second frequency-domain resource set, or as the time-domain unit configured to be used jointly with the second frequency-domain resource set. The time-domain unit corresponding to the second frequency-domain resource set may also be referred to as the time-domain unit in the second frequency-domain resource set.

Similarly, the time-domain unit corresponding to the fourth frequency-domain resource set may be understood as the time-domain unit occupied by the terminal device when operating on the fourth frequency-domain resource set, or as the time-domain unit configured to be used jointly with the fourth frequency-domain resource set. The time-domain unit corresponding to the fourth frequency-domain resource set may also be referred to as the time-domain unit in the fourth frequency-domain resource set.

The synchronization of the second frequency-domain resource set refers to a synchronization behavior in which the terminal device and the network device perform uplink synchronization and/or downlink synchronization on the second frequency-domain resource set. The synchronization behavior may also be considered as a synchronization process, a synchronization process, or a synchronization operation.

In some embodiments, the first threshold is related to a subcarrier spacing used by the second frequency-domain resource set, or the first threshold is related to a subcarrier spacing used by the fourth frequency-domain resource set, or the first threshold is related to the subcarrier spacing used by the second frequency-domain resource set and the subcarrier spacing used by the fourth frequency-domain resource set, or the first threshold is related to a cyclic prefix (CP) length used by the second frequency-domain resource set, or the first threshold is related to a CP length used by the fourth frequency-domain resource set, or the first threshold is related to the CP length used by the second frequency-domain resource set and the CP length used by the fourth frequency-domain resource set, or the first threshold is determined in a communication protocol.

In some embodiments, the larger the subcarrier spacing used by the second frequency-domain resource set and/or the subcarrier spacing used by the fourth frequency-domain resource set, the smaller the first threshold.

In some embodiments, the larger the CP length used by the second frequency-domain resource set and/or the CP length used by the fourth frequency-domain resource set, the larger the first threshold.

In some embodiments, the terminal device determines the first threshold based on the value or value range of at least one of the subcarrier spacing used by the second frequency-domain resource set, the subcarrier spacing used by the fourth frequency-domain resource set, the CP length used by the second frequency-domain resource set, or the CP length used by the fourth frequency-domain resource set.

In some embodiments, the terminal device determines the first threshold based on a correspondence relationship configured by the network device between the first threshold and the subcarrier spacing used by the second frequency-domain resource set, and/or a correspondence relationship configured by the network device between the first threshold and the subcarrier spacing used by the fourth frequency-domain resource set.

In some embodiments, the terminal device determines the first threshold based on a correspondence relationship configured by the network device between the first threshold and the CP length used by the second frequency-domain resource set, and/or a correspondence relationship configured by the network device between the first threshold and the CP length used by the fourth frequency-domain resource set.

In some embodiments, the fourth frequency-domain resource set is configured by the network device or determined in the communication protocol.

In some embodiments, the fourth frequency-domain resource set is one first frequency-domain resource set, or the fourth frequency-domain resource set is the third frequency-domain resource set, or the fourth frequency-domain resource set is a frequency-domain resource set other than the first frequency-domain resource set, the second frequency-domain resource set, and the third frequency-domain resource set.

In some embodiments, the fourth frequency-domain resource set is one frequency-domain resource set, among the third frequency-domain resource set and/or the at least one first frequency-domain resource set, of which frequency-domain position is closest to that of the second frequency-domain resource set; or
the fourth frequency-domain resource set is one frequency-domain resource set, among the third frequency-domain resource set and/or the at least one first frequency-domain resource set, of which frequency-domain position is closest to that of the second frequency-domain resource set and which has the lowest frequency; or
the fourth frequency-domain resource set is one frequency-domain resource set, among the third frequency-domain resource set and/or the at least one first frequency-domain resource set, of which frequency-domain position has a distance from that of the second frequency-domain resource set that is less than a second threshold and which has the lowest frequency; or
the fourth frequency-domain resource set is one frequency-domain resource set, among the third frequency-domain resource set and/or the at least one first frequency-domain resource set, of which frequency-domain position has a distance from that of the second frequency-domain resource set that is less than a second threshold and which has a frequency lower than a third threshold.

The second threshold is configured by the network device, determined in the communication protocol, determined through negotiation between the network device and the terminal device, or determined by the terminal device. The third threshold is configured by the network device, determined in the communication protocol, determined through negotiation between the network device and the terminal device, or determined by the terminal device.

In some embodiments, the second frequency-domain resource set is used for transmitting CSI-RS.

In some embodiments, the terminal device performs synchronization based on the CSI-RS transmitted on the second frequency-domain resource set.

In some embodiments, the first configuration information is transmitted through at least one of:
PBCH carried by a first frequency-domain resource set;
broadcast information carried by the first frequency-domain resource set;
a master indication block (MIB) carried by the first frequency-domain resource set; or
a system information block (SIB) carried by the first frequency-domain resource set.

In some embodiments, the first configuration information is transmitted in one of the following manners:
part of information indicated by the first configuration information is transmitted over the MIB on the first frequency-domain resource set;
part of information indicated by the first configuration information is transmitted over the SIB on the first frequency-domain resource set;
first part of information indicated by the first configuration information is transmitted over the MIB on the first frequency-domain resource set, and second part of information indicated by the first configuration information is transmitted over the SIB on the first frequency-domain resource set;
all information indicated by the first configuration information is transmitted over the MIB on the first frequency-domain resource set; or
all information indicated by the first configuration information is transmitted over the SIB on the first frequency-domain resource set.

Both the first part of the information and the second part of the information belong to the information indicated by the first configuration information, and the first part of the information is different from the second part of the information.

In some embodiments, the MIB on the first frequency-domain resource set is used to indicate at least one of the first frequency-domain resource set or the second frequency-domain resource set associated with the third frequency-domain resource set. Alternatively, it may be understood that the MIB on the first frequency-domain resource set is used to indicate the presence of at least one first frequency-domain resource set and/or at least one second frequency-domain resource set. The information of the at least one first frequency-domain resource set and/or the at least one second frequency-domain resource set is indicated over the SIB on the first frequency-domain resource set. Such a design keeps the amount of information in the MIB at a relatively small level, which is beneficial for transmission efficiency and reliability.

In some embodiments, the MIB on the first frequency-domain resource set is used to indicate a combination index of the frequency-domain resource set. Such a design can significantly reduce the resource overhead required for the first configuration information. However, the flexibility of indication by the first configuration information is restricted by the combination of frequency-domain resource sets. In a case where the combination of frequency-domain resource sets is set to be relatively flexible and diverse, the flexibility of indication by the first configuration information can also be guaranteed.

In some embodiments, the SIB on the first frequency-domain resource set is used to indicate all information of at least one first frequency-domain resource set and/or at least one second frequency-domain resource set, for example, whether the at least one first frequency-domain resource set and/or the at least one second frequency-domain resource set are present, and for example, the information of the at least one first frequency-domain resource set and/or the at least one second frequency-domain resource set. Such a design can be compatible with configuration methods in the related art, which is beneficial for reducing implementation complexity.

In some embodiments, at least one of the following correspondence relationships is present between a frequency-domain resource set indicated by the first configuration information and the third frequency-domain resource set:
belonging to a same serving cell, for example: at least one first frequency-domain resource set and the third frequency-domain resource set belong to the same serving cell, and/or at least one second frequency-domain resource set and the third frequency-domain resource set belong to the same serving cell;
corresponding to a same hybrid automatic repeat request (HARQ) entity, for example: at least one first frequency-domain resource set and the third frequency-domain resource set correspond to the same HARQ entity, and/or at least one second frequency-domain resource set and the third frequency-domain resource set correspond to the same HARQ entity;
corresponding to same broadcast information, for example: at least one first frequency-domain resource set and the third frequency-domain resource set correspond to the same broadcast information, and/or at least one second frequency-domain resource set and the third frequency-domain resource set correspond to the same broadcast information;
being scheduled by a same scheduling signaling, for example: at least one first frequency-domain resource set and the third frequency-domain resource set are scheduled by the same scheduling signaling, and/or at least one second frequency-domain resource set and the third frequency-domain resource set are scheduled by the same scheduling signaling;
being used to transmit a same physical channel, for example: at least one first frequency-domain resource set and the third frequency-domain resource set are used to transmit the same physical channel, and/or at least one second frequency-domain resource set and the third frequency-domain resource set are used to transmit the same physical channel;
the at least one first frequency-domain resource set being used to retransmit data transmitted on the third frequency-domain resource set;
the at least one second frequency-domain resource set being used to retransmit data transmitted on the third frequency-domain resource set;
the third frequency-domain resource set being used to retransmit data transmitted within the at least one first frequency-domain resource set; or
the third frequency-domain resource set being used to retransmit data transmitted within the at least one second frequency-domain resource set.

It should be understood that in the embodiments of the present disclosure, transmission may be understood as sending, receiving, or both sending and receiving.

**In process 330**, the terminal device receives second configuration information, wherein the second configuration information is used to indicate transmission information for the first synchronization signal.

The second configuration information is transmitted from the network device to the terminal device.

In some embodiments, the first synchronization signal refers to a synchronization signal transmitted on the first frequency-domain resource set.

The transmission information includes at least one of structure information, sequence information, time-domain resource information, or frequency-domain resource information.

The structure information indicates the structure of the first synchronization signal. The sequence information indicates the signal sequence used by the first synchronization signal, such as a ZC sequence, an m sequence, or a GOLD sequence. The time-domain resource information indicates a time-domain resource occupied by the first synchronization signal, for example, at least one of a frame, a subframe, a slot, a mini-slot, a sub-slot, a symbol, a symbol group, or a time-domain unit based on other time-domain units. The frequency-domain resource information indicates a frequency-domain resource occupied by the first synchronization signal, for example, at least one of a carrier, a cell, a serving cell, a BWP, an RB, or an RBG occupied by the first synchronization signal.

In some embodiments, the transmission information for the first synchronization signal is consistent with at least one of:
transmission information for a PSS applicable to an LTE system;
transmission information for an SSS applicable to an LTE system;
transmission information for a PSS applicable to an NR system; or
transmission information for an SSS applicable to an NR system.

That is, the first synchronization signal can reuse/re-purpose part or all of the transmission information for the LTE PSS, or reuse/re-purpose part or all of the transmission information for the LTE SSS, or reuse/re-purpose part or all of the transmission information for the NR PSS, or reuse/re-purpose part or all of the transmission information for the NR SSS. Such a design can simplify implementation on the terminal device and allows the terminal device to reuse/re-purpose synchronization algorithms corresponding to the LTE system and the NR system. In addition, such a design also provides good compatibility for the method for transmitting information. On the one hand, the method is well compatible with the transmission and detection of the synchronization signal in the related art; on the other hand, for the network device, the first synchronization signal can be compatible with terminal devices in the LTE system and the NR system, as well as the terminal device that performs process 310. For a terminal device that needs to detect the first synchronization signal, such a design not only avoids high complexity but also ensures synchronization accuracy; for a terminal device that does not detect the first synchronization signal (for example, a terminal device that considers the first frequency-domain resource set does not transmit the first synchronization signal, or a terminal device that does not need to detect the first synchronization signal), such a design can still reduce power consumption and decrease resource waste.

In some embodiments, the content indicated by the second configuration information includes time-domain resource information for the first synchronization signal. In this case, the second configuration information may indicate the time-domain position of the first synchronization signal, or indicate the time-domain offset of the first synchronization signal relative to other synchronization signals. The other synchronization signals refer to the synchronization signals, other than the first synchronization signal, that can be received or detected by the terminal device.

In some embodiments, the second configuration information indicates at least one of a transmission period, an occupied time-domain unit, a start time-domain unit, an end time-domain unit, or the number of occupied time-domain units of the first synchronization signal. The time-domain unit refers to at least one of a frame, a subframe, a slot, a mini-slot, a sub-slot, a symbol, a symbol group, or a time-domain unit based on other time-domain units.

In some embodiments, the second configuration information indicates a time-domain offset value between the first synchronization signal and other synchronization signals. For example, in a case where the second configuration information indicates a time-domain offset value of +2 slot between the first synchronization signal and the third synchronization signal, the time-domain position of the time-domain resource occupied by the first synchronization signal is two slots after the time-domain resource occupied by the third synchronization signal, as illustrated in FIG. 6. For another example, in a case where the second configuration information indicates a time-domain offset value of -1 slot between a first synchronization signal A and a first synchronization signal B, the time-domain position of the time-domain resource occupied by the first synchronization signal A is one slot before the time-domain resource occupied by the first synchronization signal B, as illustrated in FIG. 7.

In some embodiments, the second configuration information indicates a time-domain offset relationship/time-domain offset granularity between the first synchronization signal and other synchronization signals. For example, the second configuration information indicates that the period of the first synchronization signal is the same as the period of the third synchronization signal, or the second configuration information indicates that the period of the first synchronization signal is greater than the period of the third synchronization signal, or the second configuration information indicates that the period of the first synchronization signal is less than the period of the third synchronization signal, or the second configuration information indicates that an integer multiple relationship is present between the period of the first synchronization signal and the period of the third synchronization signal. For another example, the second configuration information indicates that the period of the first synchronization signal A is the same as the period of the first synchronization signal B, or the second configuration information indicates that the period of the first synchronization signal A is greater than the period of the first synchronization signal B, or the second configuration information indicates that the period of the first synchronization signal A is less than the period of the first synchronization signal B, or the second configuration information indicates that an integer multiple relationship is present between the period of the first synchronization signal A and the period of the first synchronization signal B.

It should be understood that the presence of multiple first synchronization signals is due to the presence of multiple first frequency-domain resource sets, and a first synchronization signal is transmitted on each first frequency-domain resource set.

It should be understood that process 330 is an optional process. For example, in the case where the first configuration information is used to indicate at least one first frequency-domain resource set, process 330 may be performed or not performed; in the case where the first configuration information is not used to indicate at least one first frequency-domain resource set, process 330 may not be performed.

In some embodiments, the transmission information of the first synchronization signal is explicitly indicated by the second configuration information, or the transmission information of the first synchronization signal is implicitly indicated by the second configuration information.

In some embodiments, the specific manner of implicit indication is determined in the communication protocol, configured by the network device, or determined through negotiation between the network device and the terminal device.

**In process 340,** the terminal device transmits first information to a network device.

The first information includes at least one of:
information indicating whether a capability to receive the at least one first frequency-domain resource set is present, that is, information indicating whether the use of the at least one first frequency-domain resource set is supported;
information indicating whether a capability to receive the at least one second frequency-domain resource set is present, that is, information indicating whether the use of the at least one second frequency-domain resource set is supported;
information indicating whether the at least one first frequency-domain resource set is used;
information indicating whether the at least one second frequency-domain resource set is used;
a suggested frequency-domain resource set;
a desired frequency-domain resource set;
a measurement result corresponding to the at least one first frequency-domain resource set; or
a measurement result corresponding to the at least one second frequency-domain resource set.

The suggested frequency-domain resource set includes a frequency-domain resource set suggested by the terminal device among at least one first frequency-domain resource set and/or at least one second frequency-domain resource set indicated by the first configuration information. The desired frequency-domain resource set includes a frequency-domain resource set desired by the terminal device among at least one first frequency-domain resource set and/or at least one second frequency-domain resource set indicated by the first configuration information.

It should be understood that the suggested frequency-domain resource set may also include a frequency-domain resource set suggested by the terminal device, among other frequency-domain resource sets, except for those indicated by the first configuration information. The desired frequency-domain resource set may also include a frequency-domain resource set desired by the terminal device, among other frequency-domain resource sets, except for those indicated by the first configuration information.

The measurement result corresponding to a frequency-domain resource set may be qualitative; for example, the measurement result is "good" or "not good", the measurement result is "available" or "not available", or the measurement result is "grade A" or "grade B".

The measurement result corresponding to a frequency-domain resource set may also be quantitative; for example, the measurement result includes at least one of a reference signal receiving power (RSRP) value, a reference signal strength indicator (RSSI) value, a reference signal receiving quality (RSRQ) value, a signal to interference plus noise ratio (SINR) value, a cross link interference (CLI) value, a channel state information (CSI) value, or the like.

**In process 350**, the terminal device receives third configuration information.

The third configuration information is transmitted by the network device, wherein the third configuration information is used to indicate part of frequency-domain resource sets within the at least one first frequency-domain resource set and/or the at least one second frequency-domain resource set.

In some embodiments, the part of the frequency-domain resource sets within the at least one first frequency-domain resource set and/or the at least one second frequency-domain resource set is determined by the network device based on the first information.

In some embodiments, the network device determines whether to indicate at least one first frequency-domain resource set in the third configuration information based on whether the terminal device has the capability to receive the at least one first frequency-domain resource set. In a case where the terminal device has the capability to receive one, more, or all of the first frequency-domain resource sets, the network device correspondingly indicates the one, more, or all of the first frequency-domain resource sets in the third configuration information. In a case where the terminal device does not have the capability to receive one, more, or all of the first frequency-domain resource sets, the network device correspondingly does not indicate the one, more, or all of the first frequency-domain resource sets in the third configuration information. The logic for whether to indicate the second frequency-domain resource set in the third configuration information is similar and will not be elaborated herein any further.

In some embodiments, the network device indicates the desired or suggested frequency-domain resource set in the third configuration information based on the frequency-domain resource set desired or suggested by the terminal device. The frequency-domain resource set desired or suggested by the terminal device belongs to the at least one first frequency-domain resource set and/or the at least one second frequency-domain resource set indicated by the first configuration information. In addition, the network device may, based on factors such as the current communication status within the communication system or service requirements, not indicate the frequency-domain resource set desired or suggested by the terminal device in the third configuration information.

Alternatively, the frequency-domain resource set desired/suggested by the terminal device further includes frequency-domain resource sets that do not belong to the first frequency-domain resource set or the second frequency-domain resource set; in this case, the network device may, based on its own capability or factors such as the current communication status within the communication system or service requirements, indicate the frequency-domain resource set desired/suggested by the terminal device in the third configuration information, or not indicate the frequency-domain resource set desired/suggested by the terminal device in the third configuration information.

**In process 360,** the terminal device performs data transmission with the network device.

In some embodiments, the data transmission between the terminal device and the network device is performed in the at least one first frequency-domain resource set, and/or the at least one second frequency-domain resource set, and/or the third frequency-domain resource set.

In some embodiments, the data transmission between the terminal device and the network device is performed in the part of frequency-domain resource sets indicated by the third configuration information.

It should be understood that in the embodiments of the present disclosure, processes 330, 340, 350, and 360 are optional processes. The above processes may be freely combined or split. For example, processes 310 and 320 may be implemented as a single process, that is, processes 310 and 320 may be merged into one process; processes 320 and 330 may be implemented as a single process, or the like. The execution order of each process may be changed based on the actual situation. For example, process 320 may precede process 310; process 360 may precede process 320, or the like. The above processes may be used individually or in combination. For example, process 310 may be individually implemented as a synchronization method; process 320 may be individually implemented as a configuration method; processes 320 and 330 may be implemented in combination as a configuration method; process 340 may be individually implemented as a reporting method; process 350 may be individually implemented as a scheduling method; processes 310, 350, and 360 may be implemented in combination as a data transmission method, or the like.

In summary, in the method according to the embodiments of the present disclosure, by indicating, over configuration information, the frequency-domain resource set on which the terminal device operates, the terminal device can operate in different types of frequency-domain resource sets (for example, a type in which both the synchronization signal and the broadcast information are transmitted, a type in which the synchronization signal is transmitted but the broadcast information is not transmitted, and a type in which neither the synchronization signal nor the broadcast information is transmitted), which greatly enhances the flexibility and specificity of transmitting synchronization signals and broadcast information in a communication system. The method according to the embodiments of the present disclosure not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

Moreover, the method according to the embodiments of the present disclosure makes detailed arrangements for synchronization signals related to the first frequency-domain resource set and the second frequency-domain resource set, which supports the use of synchronization signals within each frequency-domain resource set for synchronization by the respective frequency-domain resource set, thus achieving higher synchronization accuracy. By making these arrangements, the use of a synchronization signal within one frequency-domain resource set for synchronization by multiple frequency-domain resource sets is also supported, thereby reducing system overhead. The method according to the embodiments of the present disclosure not only supports improving the flexibility of synchronization behavior, but also ensures accuracy and reliability, and can reduce resource waste, thereby meeting the synchronization requirements in various communication scenarios.

With respect to the first frequency-domain resource set, since the synchronization signal is transmitted on the third frequency-domain resource set, the configuration of the first synchronization signal on the first frequency-domain resource set may have relatively reduced precision requirements or may be configured more sparsely. In the case where the first frequency-domain resource set is used in combination with the third frequency-domain resource set, the synchronization accuracy can be ensured, and the overhead required to configure the first frequency-domain resource set can also be reduced.

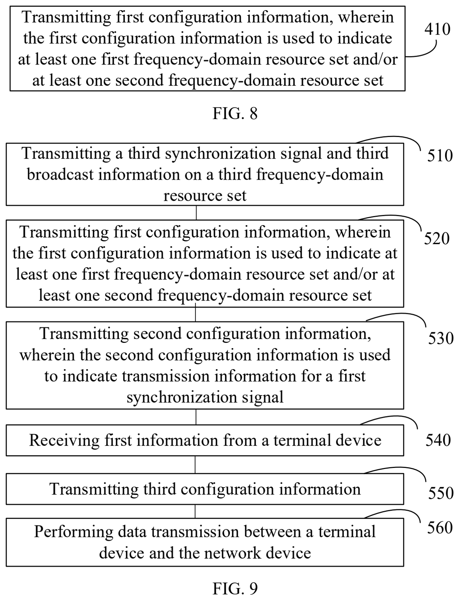

FIG. 8 illustrates a schematic flowchart of a method for transmitting information according to some embodiments of the present disclosure. The method is explained illustratively on the example that it is performed by the network device illustrated in FIG. 3. The method includes at least part of the following processes.

**In process 410,** the network device transmits first configuration information, wherein the first configuration information is used to indicate at least one first frequency-domain resource set and/or at least one second frequency-domain resource set.

The terminal device operates on at least part of frequency-domain resource sets within the at least one first frequency-domain resource set and/or the at least one second frequency-domain resource set and on a third frequency-domain resource set. Alternatively, it may be understood that all the frequency-domain resource sets in the at least one first frequency-domain resource set and/or the at least one second frequency-domain resource set belong to the operating frequency of the terminal device, and the third frequency-domain resource set also belongs to the operating frequency of the terminal device. Alternatively, it may be understood that the part of the frequency-domain resource sets within the at least one first frequency-domain resource set and/or the at least one second frequency-domain resource set belongs to the operating frequency of the terminal device, and the third frequency-domain resource set also belongs to the operating frequency of the terminal device.

In some embodiments, the terminal device operates on the at least one first frequency-domain resource set and the third frequency-domain resource set. Alternatively, the terminal device operates on the at least one second frequency-domain resource set and the third frequency-domain resource set. Alternatively, the terminal device operates on the at least one first frequency-domain resource set, the at least one second frequency-domain resource set, and the third frequency-domain resource set.

The relevant content regarding "the terminal device operating on the frequency-domain resource set" may be referred to process 210, and the details will not be elaborated herein any further.

A first synchronization signal is transmitted on each of the at least one the first frequency-domain resource set, and no first broadcast information is transmitted on each of the at least one the first frequency-domain resource set. No second synchronization signal or second broadcast information is transmitted on each of the at least one the second frequency-domain resource set; a third synchronization signal and third broadcast information are transmitted on the third frequency-domain resource set.

Broadcast information refers to system information transmitted on the PBCH. Both the synchronization signal and broadcast information may be considered as system information.

It should be noted that the concepts of "transmitting synchronization signal/broadcast information on a frequency-domain resource set" and "no synchronization signal/broadcast information transmitted on a frequency-domain resource set", as mentioned in the embodiments of the present disclosure, are described with respect to the terminal device.

In one case, "transmitting synchronization signal on a frequency-domain resource set" means that the network device transmits a synchronization signal to the terminal device on the frequency-domain resource set, and "no synchronization signal transmitted on a frequency-domain resource set" means that the network device does not transmit a synchronization signal to the terminal device on the frequency-domain resource set. In this case, there may be performance requirements for the network device and the terminal device. That is, the network device and the terminal device support the capability of transmitting synchronization signals in part of frequency-domain resource sets and not transmitting synchronization signals in part of frequency-domain resource sets.

In another case, "transmitting synchronization signal on a frequency-domain resource set" means that the network device transmits a synchronization signal to the terminal device on the frequency-domain resource set, and the terminal device detects the synchronization signal on the frequency-domain resource set; "no synchronization signal transmitted on a frequency-domain resource set" means that the network device transmits a synchronization signal to the terminal device on the frequency-domain resource set, but the terminal device does not detect the synchronization signal on the frequency-domain resource set. The cases regarding broadcast information are similar, and the details will not be elaborated herein any further. In this case, since the network device can still refer to the transmission methods of synchronization signals and broadcast information in the related art, there is no need for significant adjustments to the transmission of synchronization signals and broadcast information, which is very friendly, low-cost, and easy to apply for the network device. Moreover, such a case is also very favorable for a terminal device that needs or expects to detect synchronization signals and broadcast information in each frequency-domain resource set, as the terminal device that needs or expects to detect the synchronization signals and the broadcast information in each frequency-domain resource set can still receive the synchronization signals and the broadcast information from the network device in each frequency-domain resource set. Therefore, it can be considered that the method for transmitting information in such a case has good compatibility, being compatible both with the terminal device that needs or expects to detect the synchronization signals and the broadcast information in each frequency-domain resource set and with the network device that transmits the synchronization signals and the broadcast information in each frequency-domain resource set.

In the embodiments of the present disclosure, a frequency-domain resource set refers to a set of frequency-domain resources. The frequency-domain resource includes at least one of a carrier, a cell, a serving cell, a BWP, an RB, an RBG, or the like.

The frequency-domain resource set may be a set of multiple frequency-domain resources of the same type, such as a set of multiple carriers, a set of multiple cells, a set of multiple BWPs, or a set of multiple RBGs. The frequency-domain resource set may also be a set of multiple frequency-domain resources of different types, such as a set of multiple RBs and RBGs or a set of multiple carriers and BWPs.

In a case where no time synchronization (coarse synchronization) relationship is present among the multiple frequency-domain resource sets in which the terminal device operates, it is possible to transmit a synchronization signal but not broadcast information on at least part of the frequency-domain resource sets within the multiple frequency-domain resource sets. For example, a first synchronization signal is transmitted on a first frequency-domain resource set without transmitting the first broadcast information. In this way, the synchronization requirement of the first frequency-domain resource set is fulfilled, such that the first frequency-domain resource set achieves higher synchronization accuracy, and at the same time, the overall resource overhead of the communication system is reduced.

In the case where a time synchronization (coarse synchronization) relationship is present among the multiple frequency-domain resource sets in which the terminal device operates, it is possible to neither transmit a synchronization signal nor broadcast information on at least part of frequency-domain resource sets within the multiple frequency-domain resource sets. For example, neither a second synchronization signal nor second broadcast information is transmitted on a second frequency-domain resource set. In this way, the power consumption of the terminal device can be reduced, and the overall resource overhead of the communication system can be further reduced.

The first configuration information is transmitted from the network device to the terminal device. In some embodiments, the first configuration information is transmitted by unicast, by multicast, or by broadcast.

In some embodiments, at least one first frequency-domain resource set and/or at least one second frequency-domain resource set is explicitly indicated by the first configuration information, or at least one first frequency-domain resource set and/or at least one second frequency-domain resource set is implicitly indicated by the first configuration information.

In some embodiments, the specific manner of implicit indication is determined in the communication protocol, configured by the network device, or determined through negotiation between the network device and the terminal device.

In some embodiments, the second frequency-domain resource set is used for data transmission. In some embodiments, the second frequency-domain resource set is used to transmit at least one of the following channels or signals: a PDCCH, a PDSCH, a PUCCH, a PUSCH, a PRACH, a CRS, a CSI-RS, a PT-RS, a DMRS, or an SRS.

It should be understood that in the embodiments of the present disclosure, transmission may be understood as sending, receiving, or both sending and receiving.

In summary, in the method according to the embodiments of the present disclosure, by indicating, over configuration information, the frequency-domain resource set on which the terminal device operates, the terminal device is allowed to operate in different types of frequency-domain resource sets (for example, a type in which both the synchronization signal and the broadcast information are transmitted, a type in which the synchronization signal is transmitted but the broadcast information is not transmitted, and a type in which neither the synchronization signal nor the broadcast information is transmitted), which greatly enhances the flexibility and specificity of transmitting synchronization signals and broadcast information in a communication system. The method according to the embodiments of the present disclosure not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

FIG. 9 illustrates a schematic flowchart of a method for transmitting information according to some embodiments of the present disclosure. The method is explained illustratively on the example that it is performed by the network device illustrated in FIG. 3. The method includes at least part of the following processes.

**In process 510,** the network device transmits a third synchronization signal and third broadcast information on a third frequency-domain resource set.

The third frequency-domain resource set belongs to the operating frequency of the terminal device.

The third synchronization signal and the third broadcast information are transmitted from a network device to a terminal device and are transmitted on the third frequency-domain resource set. The terminal device detects the third synchronization signal and the third broadcast information on the third frequency-domain resource set.

In some embodiments, the third synchronization signal and the third broadcast information are carried and transmitted on an SSB, that is, the SSB includes the third synchronization signal and the third broadcast information. Therefore, process 350 may be implemented as process 510a.

In process 510a, an SSB is transmitted on the third frequency-domain resource set.

**In process 520,** the network device transmits first configuration information, wherein the first configuration information is used to indicate at least one first frequency-domain resource set and/or at least one second frequency-domain resource set.

The relevant content involved in process 520 may be referred to process 320, and the details will not be elaborated herein any further.

**In process 530,** the network device transmits second configuration information, wherein the second configuration information is used to indicate transmission information for a first synchronization signal.

The relevant content involved in process 530 may be referred to process 330, and the details will not be elaborated herein any further.

**In process 540,** the network device receives first information from the terminal device.

The relevant content involved in process 540 may be referred to process 340, and the details will not be elaborated herein any further.

**In process 550,** the network device transmites third configuration information.

The relevant content involved in process 550 may be referred to process 350, and the details will not be elaborated herein any further.

**In process 560,** the network device performs data transmission with the terminal device.

The relevant content involved in process 560 may be referred to process 360, and the details will not be elaborated herein any further.

It should be understood that in the embodiments of the present disclosure, processes 530, 540, 550, and 560 are optional processes. The above processes may be freely combined or split. For example, processes 510 and 520 may be implemented as a single process, that is, processes 510 and 520 may be merged into one process; processes 520 and 530 may be implemented as a single process, or the like. The execution order of each process may be changed based on the actual situation. For example, process 520 may precede process 510; process 560 may precede process 520, or the like. The above processes may be used individually or in combination. For example, process 510 may be individually implemented as a synchronization method; process 520 may be individually implemented as a configuration method; processes 520 and 530 may be implemented in combination as a configuration method; process 540 may be individually implemented as a reporting method; process 550 may be implemented as a scheduling method; processes 510 and 560 may be implemented in combination as a data transmission method, or the like.

In summary, in the method according to the embodiments of the present disclosure, by indicating, over configuration information, the frequency-domain resource set on which the terminal device operates, the terminal device can operate in different types of frequency-domain resource sets (for example, a type in which both the synchronization signal and the broadcast information are transmitted, a type in which the synchronization signal is transmitted but the broadcast information is not transmitted, and a type in which neither the synchronization signal nor the broadcast information is transmitted), which greatly enhances the flexibility and specificity of transmitting synchronization signals and broadcast information in a communication system. The method according to the embodiments of the present disclosure not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

Moreover, the method according to the embodiments of the present disclosure makes detailed arrangements for synchronization signals related to the first frequency-domain resource set and the second frequency-domain resource set, which supports the use of synchronization signals within each frequency-domain resource set for synchronization by the respective frequency-domain resource set, thus achieving higher synchronization accuracy. By making these arrangements, the use of a synchronization signal within one frequency-domain resource set for synchronization by multiple frequency-domain resource sets is also supported, thereby reducing system overhead. The method according to the embodiments of the present disclosure not only supports improving the flexibility of synchronization behavior, but also ensures accuracy and reliability, and can reduce resource waste, thereby meeting the synchronization requirements in various communication scenarios.

With respect to the first frequency-domain resource set, since the synchronization signal is transmitted on the third frequency-domain resource set, the configuration of the first synchronization signal on the first frequency-domain resource set may have relatively reduced precision requirements or may be configured more sparsely. In the case where the first frequency-domain resource set is used in combination with the third frequency-domain resource set, the synchronization accuracy can be ensured, and the overhead required to configure the first frequency-domain resource set can also be reduced.

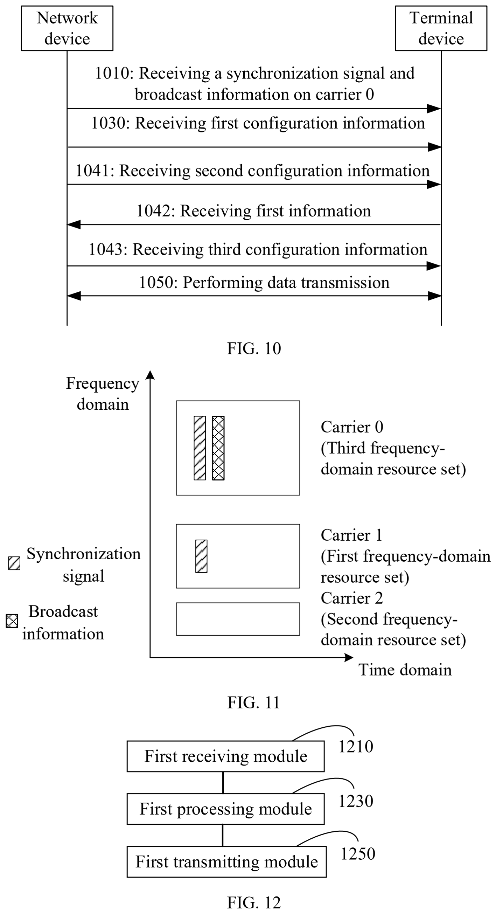

FIG. 10 illustrates a schematic flowchart of a method for transmitting information according to some embodiments of the present disclosure. The method is explained illustratively on the example that it is performed by the network device and the terminal device illustrated in FIG. 1. The method includes at least part of the following processes.

**In process 1010,** a terminal device receives a synchronization signal and broadcast information from a network device on carrier 0.

Carrier 0 includes a first synchronization signal and first broadcast information (transmitted over a broadcast channel). Carrier 0 may operate independently; that is, the terminal device may access only carrier 0 to communicate with the network device.

In a case of performing a cell search, the terminal device can detect carrier 0 and perform access.

Carrier 0 belongs to the third frequency-domain resource set.

**In process 1030,** the terminal device receives first configuration information from the network device.

That is, the terminal device reads the first configuration information. The first configuration information may originate from the broadcast information on carrier 0 or from carriers other than carrier 0.

In some embodiments, carrier aggregation is established between the network device and the terminal device.

In some embodiments, the network device aggregates three carriers for use, as illustrated in FIG. 11, the serving cell of the terminal device is formed by the aggregation of carriers 0, 1, and 2.

In some embodiments, upon reading the MIB or SIB transmitted on carrier 0, the terminal device may further be aware of the presence of carriers 1 and 2.

An independent second synchronization signal is present on carrier 1, but no broadcast information is present. The terminal device performs synchronization based on the second synchronization signal on carrier 1, and the terminal can perform data reception or transmission on carrier 1. Carrier 1 belongs to the first frequency-domain resource set.

No independent synchronization signal or broadcast information is present on carrier 2, and carrier 2 is mainly used for data reception or transmission. Synchronization of carrier 2 needs to rely on the synchronization signal on carrier 0 or 1, and may also rely on synchronization signals in other carriers except carriers 0, 1, and 2. Carrier 2 belongs to the second frequency-domain resource set.

In some embodiments, CSI-RS is present on carrier 2 (not illustrated in the figure), and the terminal device uses the CSI-RS for synchronization.

**In process 1050,** data transmission is performed between the terminal device and the network device.

Data transmission or reception between the terminal device and the network device is performed in at least one carrier among carriers 0, 1, and 2.

In some embodiments, the embodiments of the present disclosure further include at least the following three optional processes: processes 1041, 1042, and 1043, respectively.

**In process 1041,** the terminal device receives second configuration information from the network device.

The second configuration information is used to indicate transmission information for the second synchronization signal, such as signal sequence or time-frequency resources, which is beneficial for reducing the complexity and power consumption of the terminal device in detecting the second synchronization signal, and improves the accuracy and reliability of the terminal device in detecting the second synchronization signal.

**In process 1042,** the network device receives first information from the terminal device.

The first information is used to indicate at least one of:
information indicating whether a capability to operate in the at least one first frequency-domain resource set is present, that is, information indicating whether the capability to operate on carrier 1 is present;
information indicating whether a capability to operate in the at least one second frequency-domain resource set is present, that is, information indicating whether the capability to operate on carrier 2 is present;
information indicating whether the at least one first frequency-domain resource set is used, that is, information indicating whether carrier 1 is used;
information indicating whether the at least one second frequency-domain resource set is used, that is, information indicating whether carrier 2 is used;
a suggested frequency-domain resource set;
a desired frequency-domain resource set;
a measurement result corresponding to the at least one first frequency-domain resource set, that is, a measurement result of carrier 1; or
a measurement result corresponding to the at least one second frequency-domain resource set, that is, a measurement result of carrier 2.

In some embodiments, the first information is used to indicate that the terminal device supports using carriers 0, 1, and 2, and desires to use carriers 0 and 2.

**In process 1043,** the terminal device receives third configuration information from the network device.

The third configuration information is used to indicate part of frequency-domain resource sets within at least one first frequency-domain resource set and/or at least one second frequency-domain resource set.

In some embodiments, the third configuration information indicates carriers 0 and 2.

It should be understood that the execution order of optional processes 1041, 1042, and 1043 may be adjusted based on the actual situation; for example, process 1042 may be performed before process 1041, or process 1041 may be performed after process 1043. Optional processes 1041, 1042, and 1043 may be flexibly combined with processes 1010, 1030, and 1050, for example, processes 1010, 1030, 1041, and 1050 may be used in combination; or processes 1010, 1030, 1042, and 1050 may be used in combination; or processes 1010, 1030, 1043, and 1050 may be used in combination; or processes 1010, 1030, 1041, 1043, and 1050 may be used in combination; or processes 1010, 1030, 1042, 1043, and 1050 may be used in combination; or processes 1010, 1030, 1041, 1042, and 1050 may be used in combination; or processes 1010, 1030, 1041, 1042, 1043, and 1050 may be used in combination.

It should be understood that the execution order of the above-mentioned processes may be adjusted based on the actual situation. For example, process 1050 is performed both before and after processes 1010 and 1030; or process 1030 is performed before process 1010; or process 1050 is performed before process 1030; or processes 1041, 1042, and 1043 are performed between processes 1030 and 1050; or processes 1041, 1042, and 1043 are performed between processes 1010 and 1050; or process 1042 is performed before process 1030.

In summary, in the method according to the embodiments of the present disclosure, by indicating, over configuration information, frequency-domain resources in which a terminal device operates, the terminal device can operate in different types of frequency-domain resource sets, which greatly improves the flexibility and specificity of transmitting synchronization signals and broadcast information in a communication system. The method according to the embodiments of the present disclosure not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

FIG. 12 illustrates a schematic structural diagram of an apparatus for transmitting information according to some embodiments of the present disclosure. The apparatus includes at least some of the following modules: a first receiving module 1210, a first processing module 1230, and a first transmitting module 1250.

The first receiving module 1210, is configured to receive first configuration information, wherein the first configuration information is used to indicate at least one first frequency-domain resource set and/or at least one second frequency-domain resource set.

The apparatus operates on at least part of frequency-domain resource sets within the at least one first frequency-domain resource set and/or the at least one second frequency-domain resource set and on a third frequency-domain resource set. A first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

In some embodiments, the first configuration information includes at least one of: information indicating whether the at least one first frequency-domain resource set is present; information of the at least one first frequency-domain resource set; information indicating whether the at least one second frequency-domain resource set is present; information of the at least one second frequency-domain resource set; or a combination index of frequency-domain resource sets, wherein the combination index is used to indicate a combination of at least two of: the at least one first frequency-domain resource set, the information of the at least one first frequency-domain resource set, the at least one second frequency-domain resource set, and the information of the at least one second frequency-domain resource set.

In some embodiments, the information of the at least one first frequency-domain resource set includes at least one of: the number of the first frequency-domain resource sets, a frequency-domain position of the at least one first frequency-domain resource set, a central frequency point of the at least one first frequency-domain resource set, a bandwidth of the at least one first frequency-domain resource set, subcarrier spacing of the at least one first frequency-domain resource set, a frequency-domain guard bandwidth of the at least one first frequency-domain resource set, a TDD uplink-downlink configuration corresponding to the at least one first frequency-domain resource set, information indicating whether a synchronization signal is included in the at least one first frequency-domain resource set, a measurement configuration of the at least one first frequency-domain resource set, or a reporting configuration of the at least one first frequency-domain resource set; and
the information of the at least one second frequency-domain resource set includes at least one of: the number of the second frequency-domain resource sets, a frequency-domain position of the at least one second frequency-domain resource set, a central frequency point of the at least one second frequency-domain resource set, a bandwidth of the at least one second frequency-domain resource set, subcarrier spacing of the at least one second frequency-domain resource set, a frequency-domain guard bandwidth of the at least one second frequency-domain resource set, a TDD uplink-downlink configuration corresponding to the at least one second frequency-domain resource set, information indicating whether a synchronization signal is included in the at least one second frequency-domain resource set, a measurement configuration of the at least one second frequency-domain resource set, or a reporting configuration of the at least one second frequency-domain resource set.

In some embodiments, the first receiving module 1210 is configured to receive second configuration information, wherein the second configuration information is used to indicate transmission information for the first synchronization signal.

In some embodiments, the transmission information includes at least one of structure information, sequence information, time-domain resource information, or frequency-domain resource information.

In some embodiments, the transmission information for the first synchronization signal is consistent with at least one of: transmission information for a PSS applicable to a LTE system, transmission information for a SSS applicable to an LTE system, transmission information for a PSS applicable to a NR system, or transmission information for an SSS applicable to an NR system.

In some embodiments, the second configuration information is used to indicate a time-domain position of the first synchronization signal, or indicate a time-domain offset of the first synchronization signal relative to other synchronization signals.

In some embodiments, the first configuration information is used to indicate the at least one second frequency-domain resource set; an association is present between the second frequency-domain resource set and a fourth frequency-domain resource set, and a fourth synchronization signal is transmitted on the fourth frequency-domain resource set.

In some embodiments, the association includes at least one of the following cases:
the second frequency-domain resource set and the fourth frequency-domain resource set are synchronized in a time domain;
a time-domain unit corresponding to the second frequency-domain resource set is the same as a time-domain unit corresponding to the fourth frequency-domain resource set;
a time-domain interval between a time-domain unit corresponding to the second frequency-domain resource set and a time-domain unit corresponding to the fourth frequency-domain resource set is less than a first threshold; or
synchronization of the second frequency-domain resource set is performed based on the fourth synchronization signal.

In some embodiments, the first threshold is related to a subcarrier spacing used by the second frequency-domain resource set, or the first threshold is related to a subcarrier spacing used by the fourth frequency-domain resource set, or the first threshold is related to the subcarrier spacing used by the second frequency-domain resource set and the subcarrier spacing used by the fourth frequency-domain resource set, or the first threshold is related to a CP length used by the second frequency-domain resource set, or the first threshold is related to a CP length used by the fourth frequency-domain resource set, or the first threshold is related to the CP length used by the second frequency-domain resource set and the CP length used by the fourth frequency-domain resource set, or the first threshold is determined in a communication protocol.

In some embodiments, the second frequency-domain resource set is used to transmit a CSI-RS; or synchronization of the terminal device is performed based on the CSI-RS transmitted on the second frequency-domain resource set.

In some embodiments, the first configuration information is transmitted over at least one of: a PBCH carried by the first frequency-domain resource set, broadcast information carried by the first frequency-domain resource set, a MIB carried by the first frequency-domain resource set, or a SIB carried by the first frequency-domain resource set.

In some embodiments, the first configuration information is transmitted in one of the following manners:
part of information indicated by the first configuration information is transmitted over the MIB;
part of information indicated by the first configuration information is transmitted over the SIB;
first part of information indicated by the first configuration information is transmitted over the MIB, and second part of information indicated by the first configuration information is transmitted over the SIB;
all information indicated by the first configuration information is transmitted over the MIB; or
all information indicated by the first configuration information is transmitted over the SIB.

In some embodiments, the first receiving module 1210, is further configured to receive an SSB on the third frequency-domain resource set, wherein the SSB includes the third synchronization signal and the third broadcast information.

In some embodiments, at least one of the following correspondence relationships is present between a frequency-domain resource set indicated by the first configuration information and the third frequency-domain resource set:
belonging to a same serving cell; corresponding to a same HARQ entity; corresponding to same broadcast information; being scheduled by a same scheduling signaling; being used to transmit a same physical channel; the at least one first frequency-domain resource set being used to retransmit data transmitted on the third frequency-domain resource set; the at least one second frequency-domain resource set being used to retransmit data transmitted onthe third frequency-domain resource set; the third frequency-domain resource set being used to retransmit data transmitted within the at least one first frequency-domain resource set; or the third frequency-domain resource set being used to retransmit data transmitted within the at least one second frequency-domain resource set.

In some embodiments, the apparatus further includes: a first transmitting module 1250, configured to transmit first information to a network device, wherein the first information includes at least one of:
information indicating whether a capability to operate in the at least one first frequency-domain resource set is present; information indicating whether a capability to operate in the at least one second frequency-domain resource set is present; information indicating whether the at least one first frequency-domain resource set is used; information indicating whether the at least one second frequency-domain resource set is used; a suggested frequency-domain resource set; a desired frequency-domain resource set; a measurement result corresponding to the at least one first frequency-domain resource set; or a measurement result corresponding to the at least one second frequency-domain resource set.

In some embodiments, the first receiving module 1210 is further configured to receive third configuration information, wherein the third configuration information is used to indicate part of the frequency-domain resource sets within the at least one first frequency-domain resource set and/or the at least one second frequency-domain resource set.

The first receiving module 1210 is configured to perform the processes related to reception, which are performed by the terminal device in the above embodiments.

In some embodiments, the apparatus further includes a first processing module 1230. The first processing module is configured to perform the processes related to processing, determination, and synchronization, which are performed by the terminal device in the above embodiments.

The first transmitting module 1250 is configured to perform the processes related to transmission, which are performed by the terminal device in the above embodiments.

In some embodiments, the apparatus according to the embodiments of the present disclosure includes one first receiving module 1210. The first receiving module 1210 supports performing all the receiving processes performed by the terminal device in the above embodiments.

In some embodiments, the apparatus according to the embodiments of the present disclosure includes a plurality of first receiving modules 1210. The plurality of first receiving modules 1210 respectively support performing part of the receiving processes performed by the terminal device in the above embodiments.

In some embodiments, the processes performed by different first receiving modules 1210 may be completely the same, partially the same, or completely different.

In some embodiments, the apparatus according to the embodiments of the present disclosure includes one first processing module 1230. The first processing module 1230 supports performing all the processes related to processing, all the processes related to determination, and all the processes related to synchronization, which are performed by the terminal device in the above embodiments.

In some embodiments, the apparatus according to the embodiments of the present disclosure includes a plurality of first processing modules 1230. The plurality of first processing modules 1230 respectively support performing part of the processes related to processing, part of the processes related to determination, and part of the processes related to synchronization, which are performed by the terminal device in the above embodiments.

In some embodiments, the processes performed by different first processing modules 1230 are completely the same, partially the same, or completely different.

In some embodiments, the apparatus according to the embodiments of the present disclosure includes one first transmitting module 1250. The first transmitting module 1250 supports performing all the transmitting processes performed by the terminal device in the above embodiments.

In some embodiments, the apparatus according to the embodiments of the present disclosure includes a plurality of first transmitting modules 1250. The plurality of first transmitting modules 1250 respectively support performing part of the transmitting processes performed by the terminal device in the above embodiments.

In some embodiments, the processes performed by different first transmitting modules 1250 are completely the same, partially the same, or completely different.

In some embodiments, the first processing module 1230 is configured to perform at least one operation among detection, demodulation, or decoding on the information received by the first receiving module 1210.

In some embodiments, the first processing module 1230 is configured to perform at least one operation among encoding or modulation on the information transmitted by the first transmitting module 1250.

In summary, in the apparatus according to the embodiments of the present disclosure, by indicating, over configuration information, frequency-domain resources for operating, the apparatus can operate in different types of frequency-domain resource sets, which greatly improves the flexibility and specificity of transmitting synchronization signals and broadcast information in a communication system. The apparatus not only can ensure the accuracy and reliability of time-domain synchronization across multiple frequency-domain resource sets on which the apparatus operates, but also can reduce resource overhead in the communication system, thereby avoiding power consumption caused by redundant information, and improving the transmission efficiency of the communication system.

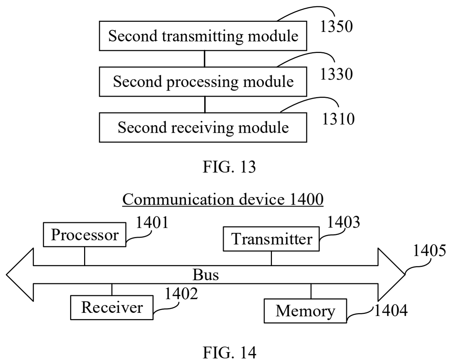

FIG. 13 illustrates a schematic structural diagram of an apparatus for transmitting information according to some embodiments of the present disclosure. The apparatus includes at least some of the following modules: a second receiving module 1310, a second processing module 1330, and a second transmitting module 1350.

The second transmitting module 1350 is configured to transmit first configuration information to a terminal device, wherein the first configuration information is used to indicate at least one first frequency-domain resource set and/or at least one second frequency-domain resource set.

The terminal device operates on a third frequency-domain resource set and on at least part of frequency-domain resource sets within the at least one first frequency-domain resource set and/or the at least one second frequency-domain resource set; wherein a first synchronization signal is transmitted on each of the at least one the first frequency-domain resource set, and no first broadcast information is transmitted on each of the at least one the first frequency-domain resource set; no second synchronization signal or second broadcast information is transmitted on each of the at least one the second frequency-domain resource set; and a third synchronization signal and third broadcast information are transmitted on the third frequency-domain resource set.

In some embodiments, the first configuration information includes at least one of: information indicating whether the at least one first frequency-domain resource set is present, information of the at least one first frequency-domain resource set, information indicating whether the at least one second frequency-domain resource set is present, information of the at least one second frequency-domain resource set, or a combination index of frequency-domain resource sets, wherein the combination index is used to indicate a combination of at least two of: the at least one first frequency-domain resource set, the information of the at least one first frequency-domain resource set, the at least one second frequency-domain resource set, and the information of the at least one second frequency-domain resource set.

In some embodiments, the information of the at least one first frequency-domain resource set includes at least one of:
the number of the first frequency-domain resource sets, a frequency-domain position of the at least one first frequency-domain resource set, a central frequency point of the at least one first frequency-domain resource set, a bandwidth of the at least one first frequency-domain resource set, subcarrier spacing of the at least one first frequency-domain resource set, a frequency-domain guard bandwidth of the at least one first frequency-domain resource set, a TDD uplink-downlink configuration corresponding to the at least one first frequency-domain resource set, information indicating whether a synchronization signal is included in the at least one first frequency-domain resource set, a measurement configuration of the at least one first frequency-domain resource set, or a reporting configuration of the at least one first frequency-domain resource set; and
the information of the at least one second frequency-domain resource set includes at least one of:
the number of the second frequency-domain resource sets, a frequency-domain position of the at least one second frequency-domain resource set, a central frequency point of the at least one second frequency-domain resource set, a bandwidth of the at least one second frequency-domain resource set, subcarrier spacing of the at least one second frequency-domain resource set, a frequency-domain guard bandwidth of the at least one second frequency-domain resource set, a TDD uplink-downlink configuration corresponding to the at least one second frequency-domain resource set, information indicating whether a synchronization signal is included in the at least one second frequency-domain resource set, a measurement configuration of the at least one second frequency-domain resource set, or a reporting configuration of the at least one second frequency-domain resource set.

In some embodiments, the second transmitting module 1350 is further configured to transmit second configuration information, wherein the second configuration information is used to indicate transmission information for the first synchronization signal.

In some embodiments, the transmission information includes at least one of structure information, sequence information, time-domain resource information, or frequency-domain resource information.

In some embodiments, the transmission information of the first synchronization signal is consistent with at least one of: transmission information for a PSS applicable to a LTE system, transmission information for a SSS applicable to an LTE system, transmission information for a PSS applicable to a NR system, or transmission information for an SSS applicable to an NR system.

In some embodiments, the second configuration information is used to indicate a time-domain position of the first synchronization signal, or indicate a time-domain offset of the first synchronization signal relative to other synchronization signals.

In some embodiments, the first configuration information is used to indicate the at least one second frequency-domain resource set; an association is present between the second frequency-domain resource set and a fourth frequency-domain resource set, and a fourth synchronization signal is transmitted on the fourth frequency-domain resource set.

In some embodiments, the association includes at least one of the following cases:
the second frequency-domain resource set and the fourth frequency-domain resource set are synchronized in a time domain;
a time-domain unit corresponding to the second frequency-domain resource set is the same as a time-domain unit corresponding to the fourth frequency-domain resource set;
a time-domain interval between a time-domain unit corresponding to the second frequency-domain resource set and a time-domain unit corresponding to the fourth frequency-domain resource set is less than a first threshold; or
synchronization of the second frequency-domain resource set is performed based on the fourth synchronization signal.

In some embodiments, the first threshold is related to a subcarrier spacing used by the second frequency-domain resource set, or the first threshold is related to a subcarrier spacing used by the fourth frequency-domain resource set, or the first threshold is related to the subcarrier spacing used by the second frequency-domain resource set and the subcarrier spacing used by the fourth frequency-domain resource set, or the first threshold is related to a CP length used by the second frequency-domain resource set, or the first threshold is related to a CP length used by the fourth frequency-domain resource set, or the first threshold is related to the CP length used by the second frequency-domain resource set and the CP length used by the fourth frequency-domain resource set, or the first threshold is determined in a communication protocol.

In some embodiments, the second frequency-domain resource set is used to transmit a CSI-RS; or synchronization of the terminal device is performed based on the CSI-RS transmitted on the second frequency-domain resource set.

In some embodiments, the first configuration information is transmitted over at least one of:
a PBCH carried by the first frequency-domain resource set;
broadcast information carried by the first frequency-domain resource set;
a MIB carried by the first frequency-domain resource set; or
a SIB carried by the first frequency-domain resource set.

In some embodiments, the first configuration information is transmitted in one of the following manners:
part of information indicated by the first configuration information is transmitted over the MIB;
part of information indicated by the first configuration information is transmitted over the SIB;
first part of information indicated by the first configuration information is transmitted over the MIB, and second part of information indicated by the first configuration information is transmitted over the SIB;
all information indicated by the first configuration information is transmitted over the MIB; or
all information indicated by the first configuration information is transmitted over the SIB.

In some embodiments, the second transmitting module is further configured to transmit an SSB on the third frequency-domain resource set, wherein the SSB includes the third synchronization signal and the third broadcast information.

In some embodiments, at least one of the following correspondence relationships is present between a frequency-domain resource set indicated by the first configuration information and the third frequency-domain resource set:
belonging to a same serving cell; corresponding to a same HARQ entity; corresponding to same broadcast information; being scheduled by a same scheduling signaling; being used to transmit a same physical channel; the at least one first frequency-domain resource set being used to retransmit data transmitted on the third frequency-domain resource set; the at least one second frequency-domain resource set being used to retransmit data transmitted on the third frequency-domain resource set; the third frequency-domain resource set being used to retransmit data transmitted within the at least one first frequency-domain resource set; or the third frequency-domain resource set being used to retransmit data transmitted within the at least one second frequency-domain resource set.

In some embodiments, the apparatus further includes: a second receiving module 1310, configured to receive first information from the terminal device, wherein the first information includes at least one of:
information indicating whether a capability to operate in the at least one first frequency-domain resource set is present; information indicating whether a capability to operate in the at least one second frequency-domain resource set is present; information indicating whether the at least one first frequency-domain resource set is used; information indicating whether the at least one second frequency-domain resource set is used; a suggested frequency-domain resource set; a desired frequency-domain resource set; a measurement result corresponding to the at least one first frequency-domain resource set; or a measurement result corresponding to the at least one second frequency-domain resource set.

In some embodiments, the second transmitting module 1350 is further configured to transmit third configuration information, wherein the third configuration information is used to indicate part of the frequency-domain resource sets within the at least one first frequency-domain resource set and/or the at least one second frequency-domain resource set.

The second receiving module 1310 is configured to perform the processes related to reception, which are performed by the network device in the above embodiments.

In some embodiments, the apparatus further includes a second processing module 1330. The second processing module is configured to perform the processes related to processing, determination, and synchronization, which are performed by the network device in the above embodiments.

The second transmitting module 1350 is configured to perform the processes related to transmission, which are performed by the network device in the above embodiments.

In some embodiments, the apparatus according to the embodiments of the present disclosure includes one second receiving module 1310. The second receiving module 1310 supports performing all the receiving processes performed by the network device in the above embodiments.

In some embodiments, the apparatus according to the embodiments of the present disclosure includes a plurality of second receiving modules 1310. The plurality of second receiving modules 1310 respectively support performing part of the receiving processes performed by the network device in the above embodiments.

In some embodiments, the processes performed by different second receiving modules 1310 may be completely the same, partially the same, or completely different.

In some embodiments, the apparatus according to the embodiments of the present disclosure includes one second processing module 1330. The second processing module 1330 supports performing all the processes related to processing, all the processes related to determination, and all the processes related to synchronization, which are performed by the network device in the above embodiments.

In some embodiments, the apparatus according to the embodiments of the present disclosure includes a plurality of second processing modules 1330. The plurality of second processing modules 1330 respectively support performing part of the processes related to processing, part of the processes related to determination, and part of the processes related to synchronization, which are performed by the network device in the above embodiments.

In some embodiments, the processes performed by different second processing modules 1330 are completely the same, partially the same, or completely different.

In some embodiments, the apparatus according to the embodiments of the present disclosure includes one second transmitting module 1350. The second transmitting module 1350 supports performing all the transmitting processes performed by the network device in the above embodiments.

In some embodiments, the apparatus according to the embodiments of the present disclosure includes a plurality of second transmitting modules 1350. The plurality of second transmitting modules 1350 respectively support performing part of the transmitting processes performed by the network device in the above embodiments.

In some embodiments, the processes performed by different second transmitting modules 1350 are completely the same, partially the same, or completely different.

In some embodiments, the second processing module 1330 is configured to perform at least one operation among detection, demodulation, or decoding on the information received by the second receiving module 1310.

In some embodiments, the second processing module 1330 is configured to perform at least one operation among encoding or modulation on the information transmitted by the second transmitting module 1350.

In summary, in the apparatus according to the embodiments of the present disclosure, by indicating, over configuration information, frequency-domain resources in which a terminal device operates, the terminal device is allowed to operate in different types of frequency-domain resource sets, which greatly improves the flexibility and specificity of transmitting synchronization signals and broadcast information in a communication system. The apparatus not only can ensure the accuracy and reliability of time-domain synchronization across multiple frequency-domain resource sets on which the terminal device operates, but also can reduce resource overhead in the communication system, thereby avoiding power consumption caused by redundant information, and improving the transmission efficiency of the communication system.

It should be noted that, for the apparatus according to the embodiments described above, the division of the functional modules is merely exemplary. In practice, the functions described above can be assigned to different functional modules as needed; that is, the internal structure of the device can be divided into different functional modules, so as to implement all or a part of the above functions.

With regard to the apparatus in the embodiments, the specific manner in which each module performs operations has been described in detail in the embodiments related to the method and will not be described in detail herein.

FIG. 14 illustrates a schematic structural diagram of a communication device (a terminal device or a network device) according to some embodiments of the present disclosure. The communication device 1400 includes: a processor 1401, a receiver 1402, a transmitter 1403, a memory 1404, and a bus 1405.

The processor 1401 includes one or more processing cores, and the processor 1401 executes various functional applications and performs information processing by running software programs and modules. In some embodiments, the processor 1401 is configured to implement the functions and processes of at least one of the first processing module 1230 or the second processing module 1330 described above.

The receiver 1402 and the transmitter 1403 may be implemented as a communication assembly, which may be a communication chip. In some embodiments, the receiver 1402 is configured to implement the functions and processes of at least one of the first receiving module 1210 or the second receiving module 1310 as described above. In some embodiments, the transmitter 1403 is configured to implement the functions and processes of at least one of the first transmitting module 1250 or the second transmitting module 1350 as described above.

The memory 1404 is communicably connected to the processor 1401 over the bus 1405. The memory 1404 is configured to store at least one instruction, and the processor 1401 is configured to execute the at least one instruction to perform the processes in the above method embodiments.

In addition, the memory 1404 may be implemented by any type or combination of volatile or non-volatile storage devices including, but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In some embodiments, the receiver 1402 independently receives signals/data, or the processor 1401 controls the receiver 1402 to receive signals/data, or the processor 1401 requests the receiver 1402 to receive signals/data, or the processor 1401 cooperates with the receiver 1402 to receive signals/data.

In some embodiments, the transmitter 1403 independently transmits signals/data, or the processor 1401 controls the transmitter 1403 to transmit signals/data, or the processor 1401 requests the transmitter 1403 to transmit signals/data, or the processor 1401 cooperates with the transmitter 1403 to transmit signals/data.

Some embodiments of the present disclosure provide a computer-readable storage medium. The computer-readable storage medium stores at least one program. The at least one program, when loaded and run by the processor, causes the processor to perform the method for transmitting information according to the method embodiments described above.

Some embodiments of the present disclosure provide a chip. The chip includes programmable logic circuitry and/or one or more program instructions. The chip, when running the programmable logic circuitry and/or the one or more program instructions on a communication device, is caused to perform the method for transmitting information according to the method embodiments described above.

Some embodiments of the present disclosure provide a computer program product. The computer program product, when running on a processor of a computer device, causes the computer device to perform the method for transmitting information described above.

Some embodiments of the present disclosure provide a computer program. The computer program includes one or more computer instructions. The one or more computer instructions, when executed by a processor of a computer device, cause the computer device to perform the method for transmitting information described above.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are optional embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A method for transmitting information, performed by a terminal device, the method comprising:
receiving first configuration information, wherein the first configuration information is used to indicate at least one first frequency-domain resource set and/or at least one second frequency-domain resource set,
wherein the terminal device operates on a third frequency-domain resource set and on at least part of frequency domain resource sets within the at least one first frequency-domain resource set and/or the at least one second frequency-domain resource set; wherein a first synchronization signal is transmitted on each of the at least one first frequency-domain resource set, and no first broadcast information is transmitted on each of the at least one first frequency-domain resource set; no second synchronization signal or second broadcast information is transmitted on each of the at least one second frequency-domain resource set; and a third synchronization signal and third broadcast information are transmitted on the third frequency-domain resource set.

2. The method according to claim 1, wherein the first configuration information comprises at least one of:
information indicating whether the at least one first frequency-domain resource set is present;
information of the at least one first frequency-domain resource set;
information indicating whether the at least one second frequency-domain resource set is present;
information of the at least one second frequency-domain resource set; or
a combination index of frequency-domain resource sets, wherein the combination index is used to indicate a combination of at least two of: the at least one first frequency-domain resource set, the information of the at least one first frequency-domain resource set, the at least one second frequency-domain resource set, and the information of the at least one second frequency-domain resource set.

3. The method according to claim 2, wherein
the information of the at least one first frequency-domain resource set comprises at least one of:
a number of the first frequency-domain resource sets, a frequency-domain position of the at least one first frequency-domain resource set, a central frequency point of the at least one first frequency-domain resource set, a bandwidth of the at least one first frequency-domain resource set, a subcarrier spacing of the at least one first frequency-domain resource set, a frequency-domain guard bandwidth of the at least one first frequency-domain resource set, a time-division duplex (TDD) uplink-downlink configuration corresponding to the at least one first frequency-domain resource set, information indicating whether a synchronization signal is contained in the at least one first frequency-domain resource set, a measurement configuration of the at least one first frequency-domain resource set, or a reporting configuration of the at least one first frequency-domain resource set; and
the information of the at least one second frequency-domain resource set comprises at least one of:
a number of the second frequency-domain resource sets, a frequency-domain position of the at least one second frequency-domain resource set, a central frequency point of the at least one second frequency-domain resource set, a bandwidth of the at least one second frequency-domain resource set, a subcarrier spacing of the at least one second frequency-domain resource set, a frequency-domain guard bandwidth of the at least one second frequency-domain resource set, a TDD uplink-downlink configuration corresponding to the at least one second frequency-domain resource set, information indicating whether a synchronization signal is contained in the at least one second frequency-domain resource set, a measurement configuration of the at least one second frequency-domain resource set, or a reporting configuration of the at least one second frequency-domain resource set.

4. The method according to any one of claims 1 to 3, wherein the first configuration information is used to indicate the at least one first frequency-domain resource set; and the method further comprises:
receiving second configuration information, wherein the second configuration information is used to indicate transmission information for the first synchronization signal.

5. The method according to claim 4, wherein the transmission information comprises at least one of structure information, sequence information, time-domain resource information, or frequency-domain resource information.

6. The method according to claim 5, wherein the transmission information for the first synchronization signal is consistent with at least one of:
transmission information for a primary synchronization signal (PSS) applicable to a long-term evolution (LTE) system;
transmission information for a secondary synchronization signal (SSS) applicable to an LTE system;
transmission information for a PSS applicable to a new radio (NR) system; or
transmission information for an SSS applicable to an NR system.

7. The method according to any one of claims 4 to 6, wherein the second configuration information is used to indicate a time-domain position of the first synchronization signal, or indicate a time-domain offset of the first synchronization signal relative to other synchronization signals.

8. The method according to any one of claims 1 to 7, wherein the first configuration information is used to indicate the at least one second frequency-domain resource set; and an association is present between the second frequency-domain resource set and a fourth frequency-domain resource set, and a fourth synchronization signal is transmitted on the fourth frequency-domain resource set.

9. The method according to claim 8, wherein the association comprises at least one of the following cases:
the second frequency-domain resource set and the fourth frequency-domain resource set are synchronized in a time domain;
a time-domain unit corresponding to the second frequency-domain resource set is the same as a time-domain unit corresponding to the fourth frequency-domain resource set;
a time-domain interval between a time-domain unit corresponding to the second frequency-domain resource set and a time-domain unit corresponding to the fourth frequency-domain resource set is less than a first threshold; or
synchronization of the second frequency-domain resource set is performed based on the fourth synchronization signal.

10. The method according to claim 9, wherein the first threshold is related to a subcarrier spacing used by the second frequency-domain resource set, or the first threshold is related to a subcarrier spacing used by the fourth frequency-domain resource set, or the first threshold is related to the subcarrier spacing used by the second frequency-domain resource set and the subcarrier spacing used by the fourth frequency-domain resource set, or the first threshold is related to a cyclic prefix (CP) length used by the second frequency-domain resource set, or the first threshold is related to a CP length used by the fourth frequency-domain resource set, or the first threshold is related to the CP length used by the second frequency-domain resource set and the CP length used by the fourth frequency-domain resource set, or the first threshold is determined in a communication protocol.

11. The method according to any one of claims 8 to 10, wherein the second frequency-domain resource set is used to transmit a channel state information reference signal (CSI-RS); or
synchronization of the terminal device is performed based on the CSI-RS transmitted on the second frequency-domain resource set.

12. The method according to any one of claims 1 to 11, wherein the first configuration information is transmitted over at least one of:
a physical broadcast channel (PBCH) carried by the first frequency-domain resource set;
broadcast information carried by the first frequency-domain resource set;
a master indication block (MIB) carried by the first frequency-domain resource set; or
a system information block (SIB) carried by the first frequency-domain resource set.

13. The method according to claim 12, wherein the first configuration information is transmitted in one of the following manners:
part of information indicated by the first configuration information is transmitted over the MIB;
part of information indicated by the first configuration information is transmitted over the SIB;
first part of information indicated by the first configuration information is transmitted over the MIB, and second part of information indicated by the first configuration information is transmitted over the SIB;
all information indicated by the first configuration information is transmitted over the MIB; or
all information indicated by the first configuration information is transmitted over the SIB.

14. The method according to any one of claims 1 to 13, further comprising:
receiving a synchronization signal block (SSB) on the third frequency-domain resource set, wherein the SSB comprises the third synchronization signal and the third broadcast information.

15. The method according to any one of claims 1 to 14, wherein at least one of the following correspondence relationships is present between a frequency-domain resource set indicated by the first configuration information and the third frequency-domain resource set:
belonging to a same serving cell;
corresponding to a same hybrid automatic repeat request (HARQ) entity;
corresponding to same broadcast information;
being scheduled by a same scheduling signaling;
being used to transmit a same physical channel;
the at least one first frequency-domain resource set being used to retransmit data transmitted on the third frequency-domain resource set;
the at least one second frequency-domain resource set being used to retransmit data transmitted on the third frequency-domain resource set;
the third frequency-domain resource set being used to retransmit data transmitted within the at least one first frequency-domain resource set; or
the third frequency-domain resource set being used to retransmit data transmitted within the at least one second frequency-domain resource set.

16. The method according to any one of claims 1 to 15, further comprising:
transmitting first information to a network device, wherein the first information comprises at least one of:
information indicating whether a capability to operate in the at least one first frequency-domain resource set is present;
information indicating whether a capability to operate in the at least one second frequency-domain resource set is present;
information indicating whether the at least one first frequency-domain resource set is used;
information indicating whether the at least one second frequency-domain resource set is used;
a suggested frequency-domain resource set;
a desired frequency-domain resource set;
a measurement result corresponding to the at least one first frequency-domain resource set; or
a measurement result corresponding to the at least one second frequency-domain resource set.

17. The method according to claim 16, further comprising:
receiving third configuration information, wherein the third configuration information is used to indicate part of the frequency-domain resource sets within the at least one first frequency-domain resource set and/or the at least one second frequency-domain resource set.

18. A method for transmitting information, performed by a network device, the method comprising:
transmitting first configuration information to a terminal device, wherein the first configuration information being used to indicate at least one first frequency-domain resource set and/or at least one second frequency-domain resource set,
wherein the terminal device operates on a third frequency-domain resource set and on at least part of frequency domain resource sets within the at least one first frequency-domain resource set and/or the at least one second frequency-domain resource set; wherein a first synchronization signal is transmitted on the first frequency-domain resource set, and no first broadcast information is transmitted on the first frequency-domain resource set; no second synchronization signal or second broadcast information is transmitted on the second frequency-domain resource set; and a third synchronization signal and third broadcast information are transmitted on the third frequency-domain resource set.

19. The method according to claim 18, wherein the first configuration information comprises at least one of:
information indicating whether the at least one first frequency-domain resource set is present;
information of the at least one first frequency-domain resource set;
information indicating whether the at least one second frequency-domain resource set is present;
information of the at least one second frequency-domain resource set; or
a combination index of frequency-domain resource sets, wherein the combination index is used to indicate a combination of at least two of: the at least one first frequency-domain resource set, the information of the at least one first frequency-domain resource set, the at least one second frequency-domain resource set, and the information of the at least one second frequency-domain resource set.

20. The method according to claim 19, wherein
the information of the at least one first frequency-domain resource set comprises at least one of:
a number of the first frequency-domain resource sets, a frequency-domain position of the at least one first frequency-domain resource set, a central frequency point of the at least one first frequency-domain resource set, a bandwidth of the at least one first frequency-domain resource set, a subcarrier spacing of the at least one first frequency-domain resource set, a frequency-domain guard bandwidth of the at least one first frequency-domain resource set, a time-division duplex (TDD) uplink-downlink configuration corresponding to the at least one first frequency-domain resource set, information indicating whether a synchronization signal is comprised in the at least one first frequency-domain resource set, a measurement configuration of the at least one first frequency-domain resource set, or a reporting configuration of the at least one first frequency-domain resource set; and
the information of the at least one second frequency-domain resource set comprises at least one of:
a number of the second frequency-domain resource sets, a frequency-domain position of the at least one second frequency-domain resource set, a central frequency point of the at least one second frequency-domain resource set, a bandwidth of the at least one second frequency-domain resource set, a subcarrier spacing of the at least one second frequency-domain resource set, a frequency-domain guard bandwidth of the at least one second frequency-domain resource set, a TDD uplink-downlink configuration corresponding to the at least one second frequency-domain resource set, information indicating whether a synchronization signal is comprised in the at least one second frequency-domain resource set, a measurement configuration of the at least one second frequency-domain resource set, or a reporting configuration of the at least one second frequency-domain resource set.

21. The method according to any one of claims 18 to 20, further comprising:
transmitting second configuration information, wherein the second configuration information is used to indicate transmission information for the first synchronization signal.

22. The method according to claim 21, wherein the transmission information comprises at least one of structure information, sequence information, time-domain resource information, or frequency-domain resource information.

23. The method according to claim 22, wherein the transmission information of the first synchronization signal is consistent with at least one of:
transmission information for a primary synchronization signal (PSS) applicable to a long-term evolution (LTE) system;
transmission information for a secondary synchronization signal (SSS) applicable to an LTE system;
transmission information for a PSS applicable to a new radio (NR) system; or
transmission information for an SSS applicable to an NR system.

24. The method according to any one of claims 21 to 23, wherein the second configuration information is used to indicate a time-domain position of the first synchronization signal, or indicate a time-domain offset of the first synchronization signal relative to other synchronization signals.

25. The method according to any one of claims 18 to 24, wherein the first configuration information is used to indicate the at least one second frequency-domain resource set; and an association is present between the second frequency-domain resource set and a fourth frequency-domain resource set, and a fourth synchronization signal is transmitted on the fourth frequency-domain resource set.

26. The method according to claim 25, wherein the association comprises at least one of the following cases:
the second frequency-domain resource set and the fourth frequency-domain resource set are synchronized in a time domain;
a time-domain unit corresponding to the second frequency-domain resource set is the same as a time-domain unit corresponding to the fourth frequency-domain resource set;
a time-domain interval between a time-domain unit corresponding to the second frequency-domain resource set and a time-domain unit corresponding to the fourth frequency-domain resource set is less than a first threshold; or
synchronization of the second frequency-domain resource set is performed based on the fourth synchronization signal.

27. The method according to claim 26, wherein the first threshold is related to a subcarrier spacing used by the second frequency-domain resource set, or the first threshold is related to a subcarrier spacing used by the fourth frequency-domain resource set, or the first threshold is related to the subcarrier spacing used by the second frequency-domain resource set and the subcarrier spacing used by the fourth frequency-domain resource set, or the first threshold is related to a cyclic prefix (CP) length used by the second frequency-domain resource set, or the first threshold is related to a CP length used by the fourth frequency-domain resource set, or the first threshold is related to the CP length used by the second frequency-domain resource set and the CP length used by the fourth frequency-domain resource set, or the first threshold is determined in a communication protocol.

28. The method according to any one of claims 18 to 27, wherein the second frequency-domain resource set is used to transmit a channel state information reference signal (CSI-RS); or
synchronization of the terminal device is performed based on the CSI-RS transmitted on the second frequency-domain resource set.

29. The method according to any one of claims 18 to 28, wherein the first configuration information is transmitted over at least one of:
a physical broadcast channel (PBCH) carried by the first frequency-domain resource set;
broadcast information carried by the first frequency-domain resource set;
a master indication block (MIB) carried by the first frequency-domain resource set; or
a system information block (SIB) carried by the first frequency-domain resource set.

30. The method according to claim 29, wherein the first configuration information is transmitted in one of the following manners:
part of information indicated by the first configuration information is transmitted over the MIB;
part of information indicated by the first configuration information is transmitted over the SIB;
first part of information indicated by the first configuration information is transmitted over the MIB, and second part of information indicated by the first configuration information is transmitted over the SIB;
all information indicated by the first configuration information is transmitted over the MIB; or
all information indicated by the first configuration information is transmitted over the SIB.

31. The method according to any one of claims 18 to 30, further comprising:
transmitting a synchronization signal block (SSB) on the third frequency-domain resource set, wherein the SSB comprises the third synchronization signal and the third broadcast information.

32. The method according to any one of claims 18 to 31, wherein at least one of the following correspondence relationships is present between a frequency-domain resource set indicated by the first configuration information and the third frequency-domain resource set:
belonging to a same serving cell;
corresponding to a same hybrid automatic repeat request (HARQ) entity;
corresponding to same broadcast information;
being scheduled by a same scheduling signaling;
being used to transmit a same physical channel;
the at least one first frequency-domain resource set being used to retransmit data transmitted on the third frequency-domain resource set;
the at least one second frequency-domain resource set being used to retransmit data transmitted on the third frequency-domain resource set;
the third frequency-domain resource set being used to retransmit data transmitted within the at least one first frequency-domain resource set; or
the third frequency-domain resource set being used to retransmit data transmitted within the at least one second frequency-domain resource set.

33. The method according to any one of claims 18 to 32, further comprising:
receiving first information from the terminal device, wherein the first information comprises at least one of:
information indicating whether a capability to operate in the at least one first frequency-domain resource set is present;
information indicating whether a capability to operate in the at least one second frequency-domain resource set is present;
information indicating whether the at least one first frequency-domain resource set is used;
information indicating whether the at least one second frequency-domain resource set is used;
a suggested frequency-domain resource set;
a desired frequency-domain resource set;
a measurement result corresponding to the at least one first frequency-domain resource set; or
a measurement result corresponding to the at least one second frequency-domain resource set.

34. The method according to claim 33, further comprising:
transmitting third configuration information, wherein the third configuration information is used to indicate part of the frequency domain resource sets within the at least one first frequency-domain resource set and/or the at least one second frequency-domain resource set.

35. An apparatus for transmitting information, comprising:
a first receiving module, configured to receive first configuration information, wherein the first configuration information is used to indicate at least one first frequency-domain resource set and/or at least one second frequency-domain resource set,
wherein the terminal device operates on a third frequency-domain resource set and on at least part of frequency domain resource sets within the at least one first frequency-domain resource set and/or the at least one second frequency-domain resource set; wherein a first synchronization signal is transmitted on the first frequency-domain resource set, and no first broadcast information is transmitted on the first frequency-domain resource set; no second synchronization signal or second broadcast information is transmitted on the second frequency-domain resource set; and a third synchronization signal and third broadcast information are transmitted on the third frequency-domain resource set.

36. An apparatus for transmitting information, comprising:
a second transmitting module, configured to transmit first configuration information to a terminal device, wherein the first configuration information is used to indicate at least one first frequency-domain resource set and/or at least one second frequency-domain resource set,
wherein the terminal device operates on a third frequency-domain resource set and on at least part of frequency domain resource sets within the at least one first frequency-domain resource set and/or the at least one second frequency-domain resource set; wherein a first synchronization signal is transmitted on the first frequency-domain resource set, and no first broadcast information is transmitted on the first frequency-domain resource set; no second synchronization signal or second broadcast information is transmitted on the second frequency-domain resource set; and a third synchronization signal and third broadcast information are transmitted on the third frequency-domain resource set.

37. A terminal device, comprising:
a processor; a transceiver, communicably connected to the processor; and a memory, configured to store one or more executable instructions of the processor,
wherein the processor is configured to load and execute the one or more executable instructions to cause the terminal device to perform the method for transmitting information as defined in any one of claims 1 to 17.

38. A network device, comprising:
a processor; a transceiver, communicably connected to the processor; and a memory, configured to store one or more executable instructions of the processor,
wherein the processor is configured to load and execute the one or more executable instructions to cause the network device to perform the method for transmitting information as defined in any one of claims 18 to 34.

39. A computer-readable storage medium, wherein the computer-readable storage medium stores one or more executable instructions, and the one or more executable instructions, when loaded and executed by a processor, cause the processor to perform the method for transmitting information as defined in any one of claims 1 to 17 or 18 to 34.

40. A chip, comprising: programmable logic circuitry or one or more programs, wherein the chip, when running the programmable logic circuitry and/or the one or more programs, is caused to perform the method for transmitting information as defined in any one of claims 1 to 17 or 18 to 34.

41. A computer program product, comprising: one or more computer instructions stored in a computer-readable storage medium, wherein the one or more computer instructions, when read by a processor of a computer device from the computer-readable storage medium and executed by the processor, cause the computer device to perform the method for transmitting information as defined in any one of claims 1 to 17 or 18 to 34.

42. A computer program, comprising: one or more computer instructions, wherein the one or more computer instructions, when executed by a processor of a computer device, cause the computer device to perform the method for transmitting information as defined in any one of claims 1 to 17 or 18 to 34.
